(19) Europäisches Patentamt
European Patent Office
Office européen des brevets

(11) **EP 4 644 250 B1**

(12) **EUROPEAN PATENT SPECIFICATION**

(45) Date of publication and mention
of the grant of the patent:
**18.03.2026 Bulletin 2026/12**

(51) International Patent Classification (IPC):
**B64D 13/04** (2006.01)   **B64D 13/06** (2006.01)

(52) Cooperative Patent Classification (CPC):
**B64D 13/06; B64D 13/04;** B64D 2013/0644

(21) Application number: **25167628.4**

(22) Date of filing: **01.04.2025**

(54) **CABIN BLOWER CONTROL SYSTEM AND METHOD**

SYSTEM UND VERFAHREN ZUR STEUERUNG EINES KABINENGEBLÄSES

SYSTÈME ET MÉTHODE DE CONTRÔLE DU VENTILATEUR DE CABINE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.04.2024 GB 202405968**

(43) Date of publication of application:
**05.11.2025 Bulletin 2025/45**

(73) Proprietor: **Rolls-Royce plc**
**London N1 9FX (GB)**

(72) Inventors:
• **Escamilla, Hadriano Morales**
**Derby DE24 8BJ (GB)**

• **Mills, Andrew R**
**Derby DE24 8BJ (GB)**
• **Sharpe, Richard**
**Derby DE24 8BJ (GB)**
• **Kadirkamanathan, Visakan**
**Derby DE24 8BJ (GB)**

(74) Representative: **Rolls-Royce plc**
**P.O. Box 31**
**IP Department (SinA-48)**
**Derby Derbyshire DE24 8BJ (GB)**

(56) References cited:
**EP-A1- 1 459 919      US-A1- 2006 080 976
US-A1- 2009 107 159    US-A1- 2017 233 080
US-A1- 2018 079 510    US-A1- 2021 171 205**

## Description

### FIELD

This disclosure relates to a cabin blower system, and more particularly, to a cabin blower control system for controlling the cabin blower system and a method of controlling the cabin blower system.

### BACKGROUND

An air cycle system is disposed downstream of a gas turbine engine to modulate air that is bled through the gas turbine engine. The gas turbine engine and the air cycle system may be associated with an application, such as, an aircraft. The air cycle system modulates air to a set of desired conditions, such as, pressure, temperature, and mass flow, so that air at an outlet of the air cycle system can be used in by an airframe. One such air cycle system includes an engine bleed air system (EBAS). However, conventional air cycle systems may increase overall fuel consumption of the aircraft. Specifically, conventional air cycle systems are responsible for a significant proportion of fuel consumption, as the air is bled directly from the compressor, which also affects combustion stability margins. In addition, the EBAS currently delivers air a high pressure at high operating temperatures. The over-pressure is reduced by a modulating manifold pressure valve, while the over-temperature requires a subsequent cooling of the air by an airframe-mounted pre-cooler, thereby increasing component count and cost, weight, and complexity associated with the EBAS.

Further, conventional air cycle systems rely on sensors to determine outlet conditions at the outlet of the air cycle system to modulate the air as per the desired conditions. Usage of sensors may increase system complexity and may induce errors in the operation of the air cycle system. Furthermore, some conventional air cycle systems employ sensorless techniques to meet the desired conditions of the air, however, such air cycle systems require tuning of a controller associated with the air cycle systems in order to achieve the desired conditions. This tuning process adds design effort and reduces a flexibility of the controller.

United States patent application US 2021/0171205 A1 discloses an environmental control system for an aircraft. The system has a blower controller for controlling a blower that supplies a pressurised airflow to an air conditioning pack of an aircraft. The blower controller has a pack flow demand adjustment module configured to receive a pack flow demand signal representative of a desired mass flow rate of an airflow supplied by the air conditioning pack, and a blower condition signal indicative of a condition of an intake airflow received by the blower, and determine a corrected pack flow demand based on the pack flow demand and the blower condition signal. The controller also has a first control signal generator configured to receive the corrected pack flow demand and generate a first control signal to control a first operating parameter of the blower in response to the corrected pack flow demand.

United States patent application US 2006/0080976 A1 discloses a refrigerant system for a motor vehicle. The system comprises a compressor, a condenser and an evaporator. A pressure sensor measures the discharge pressure at the outlet of the compressor, and a temperature sensor measures the ambient temperature at the condenser. Based on the measured values of pressure and temperature, a controller estimates the power consumption of the compressor. That estimation may then be used to control the power generation of the engine of the motor vehicle.

A solution is required to tune an airflow at the outlet of the air cycle system to meet the desired conditions without using sensors, while addressing the shortcomings of higher fuel consumption, over-pressure, and over-temperature.

### SUMMARY

In a first aspect there is provided a cabin blower control system for controlling a cabin blower system as set out in claim 1.

The cabin blower control system described herein may safely modulate the outlet airflow to a set of desired conditions, that is, pressure, temperature, and mass flow conditions, while minimising fuel consumption of the cabin blower system, minimising over-pressure, and minimising over-temperature. The processor of the cabin blower control system executes a control logic to govern the cabin blower system without the need to measure the outlet conditions, that is, pressure, temperature, and mass flow conditions of the outlet airflow that is delivered to an airframe system. Thus, the cabin blower control system does not require the use of sensors. Further, the cabin blower control system may allow replacement of a conventional engine bleed-air system (EBAS) with the cabin blower system. In other words, the cabin blower control system may allow the cabin blower system to perform the same functionality that is currently conducted by the EBAS, while reducing fuel consumption. Further, the outlet airflow that is modulated may service other sub-systems, such as, an environmental control system (ECS) or a wing anti-icing subsystem. Further, replacement of the EBAS with the cabin blower system having the cabin blower control system may improve passenger comfort, may eliminate the risk of fumes leakage into an aircraft cabin by means of decoupling cabin air from engine core air, may improve efficiency of a gas turbine engine of the aircraft, and may minimise an amount of energy thrown overboard by reducing the amount of pressure regulation and cooling required.

The cabin blower control system may allow the blower unit to operate efficiently, and in an open-loop manner by eliminating the need to measure the outlet conditions, while preserving the capability of adapting to changing operating conditions. Further, the cabin blower control system may be able to adapt to changes in external operating conditions by monitoring the current power consumption of the blower unit. Furthermore, the cabin blower control system can be readily used to determine the desired speed of any compressor as the processor makes use of the predetermined blower dataset to determine the desired speed. Thus, if the compressor of the blower unit needs to be replaced, no additional work may be required for implementing the cabin blower control system, as only updating the predetermined blower dataset will readapt the cabin blower control system to the new compressor. Moreover, the processor determines the estimated operating condition to determine the desired speed of the compressor. Thus, the control strategy described herein may change dynamically with changes in the external operating conditions. As the cabin blower control system eliminates the requirement of instrumentation, such as sensors, at the outlet of the cabin blower system, the cabin blower control system may be simple to implement, may be reliable in operation, may be cost-effective, and may have lower weight.

The control strategy described in the present disclosure may be applied to other compression systems or pumps to regulate speed and geometry where mass flow control is needed, subject to temperature and pressure constraints. Further, the control strategy described in the present disclosure may be used to monitor key parameters in compression or pump systems, or as synthetic sensors for determining redundancy in systems where measurements are available.

In some embodiments, the processor is further configured to receive an operating pressure range of a pressure of the outlet airflow. The processor is further configured to receive an operating temperature range of a temperature of the outlet airflow. The processor is further configured to receive an operating speed range of the at least one compressor of the blower unit. The processor is further configured to determine a desired pressure ratio range of the blower unit by using the inlet pressure and the operating pressure range. The processor is further configured to determine a desired temperature ratio range of the blower unit by using the inlet temperature and the operating temperature range. The processor is further configured to determine the desired speed of the at least one compressor by further using the desired pressure ratio range, the desired temperature range, the operating speed range, and the estimated operating condition in the predetermined blower dataset.

Thus, the processor is configured to take into account the operating pressure range, the operating temperature range, and the operating speed range to determine the desired speed of the at least one compressor. This way, the cabin blower control system may ensure that the desired speed for delivering the outlet airflow at the desired mass flow rate is determined while respecting the minimum and maximum limits for temperature and pressure for the outlet airflow.

In some embodiments, the blower unit further includes a variable exit vane arrangement configured to control the outlet airflow. The drive unit is further configured to control the variable exit vane arrangement. The pressure ratio dataset further correlates the pressure ratio of the blower unit with at least the operating condition of the blower unit, the compressor speed of the at least one compressor, and a position of the variable exit vane arrangement, the isentropic efficiency dataset further correlates the isentropic efficiency of the blower unit with at least the operating condition of the blower unit, the compressor speed of the at least one compressor, and the position of the variable exit vane arrangement, and the mass flow dataset further correlates the mass flow through the blower unit with at least the operating condition of the blower unit, the compressor speed of the at least one compressor, and the position of the variable exit vane arrangement. The processor is further configured to determine a set of desired speeds of the at least one compressor to achieve the desired mass flow rate for all positions of the variable exit vane arrangement using the estimated operating condition in the mass flow dataset. The processor is further configured to determine a combination of a desired position of the variable exit vane arrangement and the desired speed that satisfies each of the operating pressure range and the operating temperature range using the estimated operating condition in the predetermined blower dataset. The processor is further configured to transmit a vane command signal to the drive unit to operate the variable exit vane arrangement at the desired position.

Thus, the cabin blower control system provides a sensorless multivariable control logic, capable of driving the cabin blower system to a time-varying setpoint in air delivery conditions, i.e., mass flow, temperature, and pressure, by changing simultaneously the speed of the compressor and the position of the variable exit vane arrangement. Further, the cabin blower control system simultaneously determines the desired speed and the desired position to meet the desired mass flow rate, while respecting the minimum and maximum limits for temperature and pressure for the outlet airflow.

In some embodiments, the processor is further configured to receive a detected operating condition of the cabin blower system from at least one airframe system positioned downstream of the cabin blower system. The processor is further configured to determine if the detected operating condition of the cabin blower system corresponds to the estimated operating condition of the blower unit based on a comparison between the detected operating condition and the estimated operating condition.

The detected operating condition may be used in a monitoring step to detect performance deviations or system degradation. The detected operating condition may be used to assess a deviation between the detected operating condition and the estimated operating condition, in order to assess the predetermined blower dataset or one or more components of the cabin blower control system.

In some embodiments, the processor is further configured to receive an operating efficiency of the drive unit. The processor is further configured to determine the estimated operating condition further based on the operating efficiency. The operating efficiency may represent a difference between power consumed by the compressor and the work done by the compressor. As the operating efficiency may affect a torque of the compressor, taking the operating efficiency into account to determine the estimated operating condition may improve an accuracy of the cabin blower control system.

In some embodiments, the cabin blower control system further includes a recirculation valve adapted to provide selective fluid communication between the outlet of the cabin blower system and the inlet of the cabin blower system. The processor is communicably coupled to the recirculation valve. The processor is further configured to receive a desired temperature of the outlet airflow to meet the current loading on the cabin blower system. The processor is further configured to operate the recirculation valve in an open state if the desired temperature of the outlet airflow is below a predefined temperature threshold. The recirculation valve may allow the cabin blower system to rework a part of the fluid, which may in turn permit the cabin blower system to reach higher temperatures for the same pressure ratio. This technique may be useful in a situation wherein the minimum outlet temperature of the outlet airflow would take the pressure of the outlet airflow to a high value. In such a situation, incorporation of the recirculation valve may keep the pressure of the outlet airflow at a lower level, while delivering the minimum outlet temperature of the outlet airflow.

In some embodiments, the cabin blower control system further includes a release valve adapted to provide selective fluid communication between the outlet of the cabin blower system and a bypass duct downstream of the outlet of the blower unit. The processor is communicably coupled to the release valve. The processor is further configured to operate the release valve in an open state in case of a high pressure, a high temperature, or a high mass flow rate in the cabin blower system. As the compressor may be physically attached to a shaft of the gas turbine engine, it may not be possible to reduce the speed of the compressor below a certain threshold value, which is governed by a desired engine speed. However, if the airframe system is requesting low mass flow rates and low pressures of the outlet airflow, it might not be possible to reduce the mass flow rate of the outlet airflow to the value requested if the speed of the compressor is constrained by the threshold value. Incorporation of the release valve may allow some amount of the outlet airflow to be released to the bypass duct or the environment/ambient, thereby decreasing the pressure and mass flow rate of air that is being supplied to the airframe system.

In some embodiments, the desired speed of the at least one compressor is determined without measuring any outlet conditions at the outlet of the cabin blower system. The outlet conditions include at least a mass flow rate, a temperature, and a pressure of the outlet airflow. The cabin blower control system provides an open-loop strategy that guarantees independence from the outlet conditions, which may eliminate the probability of sensor-related errors. For example, the cabin blower control system may eliminate issues related to sensing dynamics and measurement noise related to temperature and pressure sensors.

In a second aspect there is provided a cabin blower system as set out in claim 9.

The cabin blower system including the cabin blower control system may operate at an improved operational efficiency. The cabin blower control system may safely modulate the outlet airflow as per the desired mass flow rate, while minimising fuel consumption of the cabin blower system, minimising over-pressure, and minimising over-temperature.

In a third aspect there is provided a method of controlling a cabin blower system as set out in claim 10.

The method described herein may safely modulate the outlet airflow to a set of desired conditions, that is, pressure, temperature, and mass flow conditions, while minimising fuel consumption of the cabin blower system, minimising over-pressure, and minimising over-temperature. The method executes a control logic to govern the cabin blower system without the need to measure the outlet conditions, that is, pressure, temperature, and mass flow conditions of the outlet airflow that is delivered to an airframe system. Thus, the method does not require the use of sensors. Further, the method may allow replacement of a conventional engine bleed-air system (EBAS) with the cabin blower system. In other words, the method may allow the cabin blower system to perform the same functionality that is currently conducted by the EBAS, while reducing fuel consumption. Further, the outlet airflow that is modulated may service other sub-systems, such as, an environmental control system (ECS) or a wing anti-icing subsystem. Further, method described herein may improve passenger comfort, may eliminate the risk of fumes leakage into an aircraft cabin by means of decoupling cabin air from engine core air, may improve efficiency of a gas turbine engine of the aircraft, and may minimise an amount of energy thrown overboard by reducing the amount of pressure regulation and cooling required.

The method may allow the blower unit to operate efficiently, and in an open-loop manner by eliminating the need to measure the outlet conditions, while preserving the capability of adapting to changing operating conditions. Further, the method may be able to adapt to changes in external operating conditions by monitoring the current power consumption of the blower unit. Furthermore, the method can be readily used to determine the desired speed of any compressor as the method makes use of the predetermined blower dataset to determine the desired speed. Thus, if the compressor of the blower unit needs to be replaced, no additional work may be required for implementing the method, as only updating the predetermined blower dataset will readapt the method to the new compressor. Moreover, the method determines the estimated operating condition to determine the desired speed of the compressor. Thus, the control strategy described herein may change dynamically with changes in the external operating conditions. As the method eliminates the requirement of instrumentation, such as sensors, at the outlet of the cabin blower system, the method may be simple to implement, may be reliable in operation, and may be cost-effective.

The method described in the present disclosure may be applied to other compression systems or pumps to regulate speed and geometry where mass flow control is needed, subject to temperature and pressure constraints. Further, the method described in the present disclosure may be used to monitor key parameters in compression or pump systems, or as synthetic sensors for determining redundancy in systems where measurements are available.

In some embodiments, the method further includes receiving, by the processor, an operating pressure range of a pressure of the outlet airflow. The method further includes receiving, by the processor, an operating temperature range of a temperature of the outlet airflow. The method further includes receiving, by the processor, an operating speed range of the at least one compressor of the blower unit. The method further includes determining, by the processor, a desired pressure ratio range of the blower unit by using the inlet pressure and the operating pressure range. The method further includes determining, by the processor, a desired temperature ratio range of the blower unit by using the inlet temperature and the operating temperature range. The method further includes determining, by the processor, the desired speed of the at least one compressor by further using the desired pressure ratio range, the desired temperature ratio range, the operating speed range, and the estimated operating condition in the predetermined blower dataset.

Thus, the method is configured to take into account the operating pressure range, the operating temperature range, and the operating speed range to determine the desired speed of the at least one compressor. This way, the method may ensure that the desired speed for delivering the outlet airflow at the desired mass flow rate is determined while respecting the minimum and maximum limits for temperature and pressure for the outlet airflow.

In some embodiments, the blower unit further includes a variable exit vane arrangement configured to control the outlet airflow. The drive unit is further configured to control the variable exit vane arrangement. The pressure ratio dataset further correlates the pressure ratio of the blower unit with at least the operating condition of the blower unit, the compressor speed of the at least one compressor, and a position of the variable exit vane arrangement, the isentropic efficiency dataset further correlates the isentropic efficiency of the blower unit with at least the operating condition of the blower unit, the compressor speed of the at least one compressor, and the position of the variable exit vane arrangement, and the mass flow dataset further correlates the mass flow through the blower unit with at least the operating condition of the blower unit, the compressor speed of the at least one compressor, and the position of the variable exit vane arrangement. The method further includes determining, by the processor, a set of desired speeds of the at least one compressor to achieve the desired mass flow rate for all positions of the variable exit vane arrangement using the estimated operating condition in the mass flow dataset. The method further includes determining, by the processor, a combination of a desired position of the variable exit vane arrangement and the desired speed that satisfies each of the operating pressure range and the operating temperature range using the estimated operating condition in the predetermined blower dataset. The method further includes transmitting, by the processor, a vane command signal to the drive unit to operate the variable exit vane arrangement at the desired position.

Thus, the method provides a sensorless multivariable control logic, capable of driving the cabin blower system to a time-varying setpoint in air delivery conditions, i.e., mass flow, temperature, and pressure, by changing simultaneously the speed of the compressor and the position of the variable exit vane arrangement. Further, the method simultaneously determines the desired speed and the desired position to meet the desired mass flow rate, while respecting the minimum and maximum limits for temperature and pressure for the outlet airflow.

In some embodiments, the method further includes receiving, by the processor, a detected operating condition of the cabin blower system from at least one airframe system positioned downstream of the cabin blower system. The method further includes determining, by the processor, if the detected operating condition of the cabin blower system corresponds to the estimated operating condition of the blower unit based on a comparison between the detected operating condition and the estimated operating condition.

The detected operating condition may be used in a monitoring step to detect performance deviations or system degradation. The detected operating condition may be used to assess a deviation between the detected operating condition and the estimated operating condition, in order to assess the predetermined blower dataset or one or more components of the cabin blower system.

In some embodiments, the method further includes receiving, by the processor, an operating efficiency of the drive unit. The method further includes determining, by the processor, the estimated operating condition further based on the operating efficiency. The operating efficiency may represent a difference between power consumed by the compressor and the work done by the compressor. As the operating efficiency may affect a torque of the compressor, taking the operating efficiency into account to determine the estimated operating condition may improve an accuracy of the method.

In some embodiments, the cabin blower system further includes a recirculation valve adapted to provide selective fluid communication between the outlet of the cabin blower system and the inlet of the cabin blower system. The processor is communicably coupled to the recirculation valve. The method further includes receiving, by the processor, a desired temperature of the outlet airflow to meet the current loading on the cabin blower system. The method further includes operating, by the processor, the recirculation valve in an open state if the desired temperature of the outlet airflow is below a predefined temperature threshold. The recirculation valve may allow the cabin blower system to rework a part of the fluid, which may in turn permit the cabin blower system to reach higher temperatures for the same pressure ratio. This technique may be useful in a situation wherein the minimum outlet temperature of the outlet airflow would take the pressure of the outlet airflow to a high value. In such a situation, incorporation of the recirculation valve may keep the pressure of the outlet airflow at a lower level, while delivering the minimum outlet temperature of the outlet airflow.

In some embodiments, the cabin blower system further includes a release valve adapted to provide selective fluid communication between the outlet of the cabin blower system and a bypass duct downstream of the outlet of the blower unit. The processor is communicably coupled to the release valve. The method further includes operating, by the processor, the release valve in an open state in case of a high pressure, a high temperature, or a high mass flow rate in the cabin blower system. As the compressor may be physically attached to the shaft of the gas turbine engine, it may not be possible to reduce the speed of the compressor below a certain threshold value, which is governed by a desired engine speed. However, if the airframe system is requesting low mass flow rates and low pressures of the outlet airflow, it might not be possible to reduce the mass flow rate of the outlet airflow to the value requested if the speed of the compressor is constrained by the threshold value. Incorporation of the release valve may allow some amount of the outlet airflow to be released to the bypass duct, thereby decreasing the pressure and mass flow rate of the outlet airflow.

In some embodiments, the desired speed of the at least one compressor is determined at the step (h) without measuring any outlet conditions at the outlet of the cabin blower system. The outlet conditions include at least a mass flow rate, a temperature, and a pressure of the outlet airflow. The method provides an open-loop strategy that guarantees independence from the outlet conditions, which may eliminate the probability of sensor-related errors. For example, the methods may eliminate issues related to sensing dynamics and measurement noise related to temperature and pressure sensors.

## BRIEF DESCRIPTION OF THE DRAWINGS

Embodiments will now be described by way of example only with reference to the accompanying drawings, which are purely schematic and not to scale, and in which:

FIG. 1 shows a schematic side view of a gas turbine engine;
FIG. 2 is a block diagram of a cabin blower control system for controlling a cabin blower system;
FIG. 3A is a block diagram depicting various functions performed by a processor of a controller associated with the cabin blower control system shown in FIG. 2;
FIG. 3B depicts a function to determine an estimated operating condition;
FIG. 4 illustrates a block diagram depicting various process steps to determine a desired speed of a compressor and a variable exit vane arrangement of the cabin blower system shown in FIG. 2;
FIG. 5A illustrates an inverted pressure ratio dataset depicting a compressor surface at an exemplary operating condition of a blower unit of the cabin blower system shown in FIG. 2;
FIG. 5B illustrates an inverted temperature ratio dataset depicting a compressor surface at the exemplary operating condition of the blower unit;
FIG. 5C illustrates an inverted mass flow dataset depicting a compressor surface at the exemplary operating condition of the blower unit;
FIG. 6A illustrates the inverted pressure ratio dataset depicting a compressor line at a desired mass flow through the blower unit;
FIG. 6B illustrates the inverted temperature ratio dataset depicting a compressor line at a desired mass flow through the blower unit;
FIG. 6C illustrates the inverted mass flow dataset depicting a compressor line at a desired mass flow through the blower unit;
FIG. 7A illustrates the compressor line obtained in FIG. 6A plotted in two dimensions;
FIG. 7B illustrates the compressor line obtained in FIG. 6B plotted in two dimensions;
FIG. 7C illustrates the compressor line obtained in FIG. 6C plotted in two dimensions;
FIG. 8 is a block diagram of a cabin blower control system for controlling the cabin blower system, according to another embodiment of the present disclosure;
FIG. 9 is a block diagram of a cabin blower control system including a recirculation valve, according to yet another embodiment of the present disclosure;
FIG. 10 is a block diagram of a cabin blower control system including a variable inlet vane arrangement, according to yet another embodiment of the present disclosure;
FIG. 11 is a block diagram of a cabin blower control system including a release valve, according to yet another embodiment of the present disclosure;

**FIG. 12** is a block diagram of a cabin blower control system for controlling a cabin blower system that provides an airflow to multiple systems, according to yet another embodiment of the present disclosure; and
**FIG. 13** is a flowchart for a method of controlling the cabin blower system.

## DETAILED DESCRIPTION

Embodiments of the present disclosure will now be discussed with reference to the accompanying Figures. Further embodiments will be apparent to those skilled in the art.

As used herein, the term "configured to" and like is at least as restrictive as the term "adapted to" and requires actual design intention to perform the specified function rather than mere physical capability of performing such a function.

As used herein, the terms "first", "second", and "third" are used as identifiers. Therefore, such terms should not be construed as limiting of this disclosure. The terms "first", "second", and "third", when used in conjunction with a feature or an element can be interchanged throughout the embodiments of this disclosure.

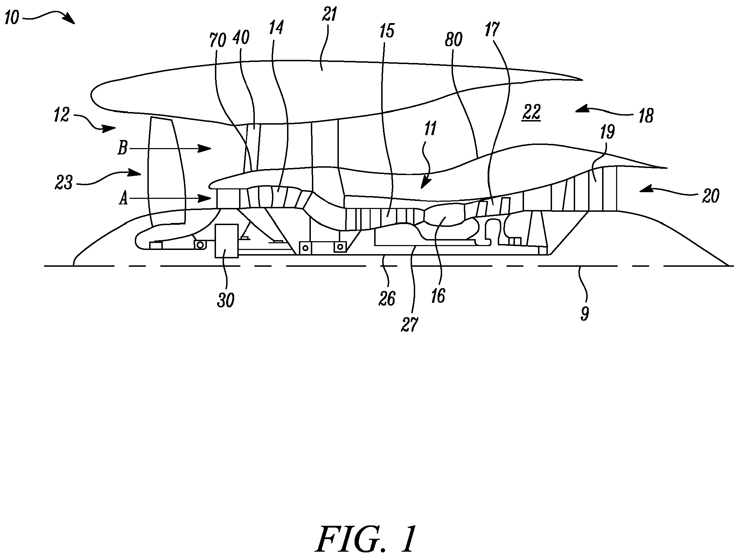

**FIG. 1** illustrates a schematic side view of a gas turbine engine 10 having a principal rotational axis 9. The gas turbine engine 10 comprises an air intake 12 and a fan 23 that generates two airflows: a core airflow A and a bypass airflow B. The gas turbine engine 10 comprises an engine core 11 that receives the core airflow A. In other words, the core airflow A enters the engine core 11. The fan 23 is located upstream of the engine core 11. The fan 23 includes a plurality of blades (not shown) that upon rotating, generates the core airflow A and the bypass airflow B.

The engine core 11 comprises, in axial flow series, a compressor, a combustor, and a turbine. Specifically, the engine core 11 comprises, in axial flow series, a low pressure compressor 14, a high pressure compressor 15, a combustor 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22 surrounding the engine core 11. The bypass airflow B flows through the bypass duct 22 to provide propulsive thrust, where it is straightened by a row of outer guide vanes 40 before exiting the bypass exhaust nozzle 18. The outer guide vanes 40 extend radially outwardly from an inner ring 70 which defines a radially inner surface of the bypass duct 22. Rearward of the outer guide vanes 40, the engine core 11 is surrounded by an inner cowl 80 which provides an aerodynamic fairing defining an inner surface of the bypass duct 22. The inner cowl 80 is rearwards of and axially spaced from the inner ring 70. The inner ring 70 defines the inner surface of the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustor 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. A core shaft 27 connects the turbine 17, 19 to the compressor 14, 15. Specifically, the high pressure turbine 17 drives the high pressure compressor 15 by the suitable core shaft 27 or an interconnecting shaft. The fan 23 generally provides the majority of the propulsive thrust. The epicyclic gearbox 30 is a reduction gearbox.

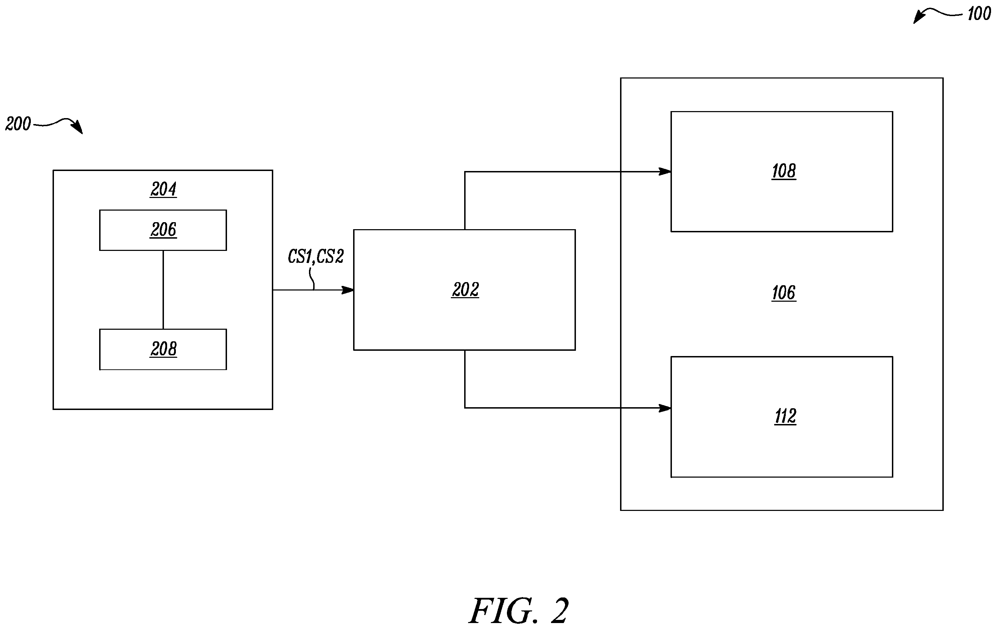

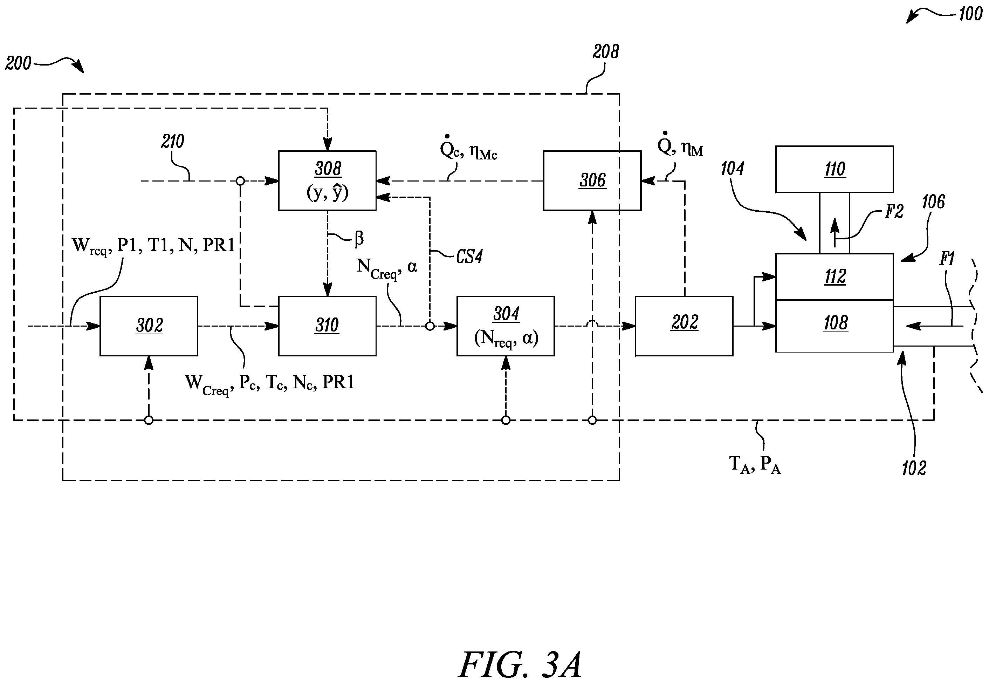

**FIG. 2** is a block diagram of a cabin blower control system 200 for controlling a cabin blower system 100. The cabin blower control system 200 includes an inlet 102 (shown in FIG. 3A), an outlet 104 (shown in FIG. 3A), and a blower unit 106. The blower unit 106 includes at least one compressor 108 that is configured to receive an inlet airflow F1 (shown in FIG. 3A) from the inlet 102 and generate an outlet airflow F2 (shown in FIG. 3A) at the outlet 104. In some examples, the inlet airflow F1 may include a portion of the bypass airflow B (see FIG. 1) received from the bypass duct 22 (see FIG. 1) that typically has a temperature below 100° Celsius. In other examples, the inlet airflow F1 may include a portion of air (for example, compressed air) bled from the compressors 14, 15 (see FIG. 1). Further, the inlet airflow F1 may include, for example, re-circulated airflow from an air conditioning system used for cooling a cabin of an aircraft in which the cabin blower system 100 is installed. Moreover, the outlet airflow F2 may be directed towards at least one airframe system 110 (shown in FIG. 3A) positioned downstream of the cabin blower system 100. The airframe system 110 may include, for example, an environmental control system (ECS) or a wing anti-icing subsystem.

In the illustrated embodiment of FIG. 2, the blower unit 106 includes a single compressor 108. However, the blower unit 106 may include multiple compressors. In the illustrated embodiment of FIG. 2, the cabin blower control system 200 further includes a variable exit vane arrangement 112 configured to control the outlet airflow F2. Further, the gas turbine engine 10 (see FIG. 1) may provide operating power to the compressor 108 via a number of ways, such as, electrical power that is generated by the gas turbine engine 10, or mechanically in which drive is typically taken from a shaft of the gas turbine engine 10. The compressor 108 may be a blower, an impeller, or a pair of impellers, a rotary compressor, a reciprocating compressor, and the like. The compressor 108 may include, for example, a vane type compressor, a piston type compressor, and a rotating screw type compressor, or an axial compressor as used in the engine core 11 (see FIG. 1).

The cabin blower control system 200 includes a drive unit 202 operatively coupled to and configured to control the blower unit 106. Specifically, the drive unit 202 may control a rotational speed of the compressor 108. The cabin blower control system 200 is further configured to control the variable exit vane arrangement 112. Specifically, the drive unit 202 may control a position (i.e., a geometric position) of a plurality of guide vanes (not shown) of the variable exit vane arrangement 112. In order to vary the position of the plurality of guide vanes, a throat area associated with the variable exit vane arrangement 112 may be varied. In an example, a sliding wall may be used to vary the throat area. The drive unit 202 may include a drive motor, such as, an electric motor. Further, the drive unit 202 may also include one or more actuating mechanisms that may control the position of the variable exit vane arrangement 112. The present disclosure is not limited to a type of the drive unit 202. The drive unit 202 can control the compressor via a fully electric system, a hybrid electro-mechanical system, and the like.

The cabin blower control system 200 further includes a controller 204 including a memory 206 and a processor 208 communicably coupled with the memory 206. In some examples, the memory 206 may include a random access memory (RAM), such as, synchronous dynamic random access memory (SDRAM), a read-only memory (ROM), a nonvolatile random access memory (NVRAM), an electrically erasable programmable read-only memory (EEPROM), a FLASH memory, a magnetic or optical data storage media, and the like, that can be used to store various information or desired program codes in the form of instructions or data structures and that can be accessed by the processor 208.

Further, the processor 208 may execute various types of digitally stored instructions, such as software applications or algorithms, retrieved from the memory 206, or a firmware program which may enable the processor 208 to perform a wide variety of operations. It should be noted that the processor 208 may embody a single microprocessor or multiple microprocessors for receiving various input signals and generating output signals. Numerous commercially available microprocessors may perform the functions of the processor 208. The processor 208 may further include a general processor, a central processing unit, an application specific integrated circuit (ASIC), a digital signal processor, a field programmable gate array (FPGA), a digital circuit, an analog circuit, a microcontroller, any other type of processor, or any combination thereof. The processor 208 may include one or more components that may be operable to execute computer executable instructions or computer code that may be stored and retrieved from the memory 206.

The memory 206 is configured to store a predetermined blower dataset 210 (shown in FIG. 3A) for the blower unit 106 of the cabin blower system 100. The predetermined blower dataset 210 may include multiple datasets obtained experimentally by taking the compressor 108 through a range of operating conditions in order to retrieve a pressure ratio, a mass flow, and an isentropic efficiency. The predetermined blower dataset 210 may be similar to the blower maps described in the disclosure "Effects of variable diffuser vanes on performance of a centrifugal compressor with pressure ratio of 8.0", published in Energies, Volume 10, Issue 5, Article 682, and written by Ebrahimi, Mohsen, Qiangqiang Huang, Xiao He, Xinqian Zheng in the year 2017.

The predetermined blower dataset 210 includes at least a pressure ratio dataset correlating a pressure ratio of the blower unit 106 with at least an operating condition of the blower unit 106 and a compressor speed of the at least one compressor 108, an isentropic efficiency dataset correlating an isentropic efficiency of the blower unit 106 with at least the operating condition of the blower unit 106 and the compressor speed of the at least one compressor 108, and a mass flow dataset correlating a mass flow through the blower unit 106 with at least the operating condition of the blower unit 106 and the compressor speed of the at least one compressor 108. The term "compressor speed" as mentioned herein may include a plurality of compressor speeds at different operating conditions.

The pressure ratio dataset further correlates the pressure ratio of the blower unit 106 with at least the operating condition of the blower unit 106, the compressor speed of the at least one compressor 108, and the position of the variable exit vane arrangement 112, the isentropic efficiency dataset further correlates the isentropic efficiency of the blower unit 106 with at least the operating condition of the blower unit 106, the compressor speed of the at least one compressor 108, and the position of the variable exit vane arrangement 112, and the mass flow dataset further correlates the mass flow through the blower unit 106 with at least the operating condition of the blower unit 106, the compressor speed of the at least one compressor 108, and the position of the variable exit vane arrangement 112. The operating condition of the blower unit 106 includes one or more operating parameters at the outlet 104 of the blower unit 106. The operating conditions are governed by the airframe system 110.

Referring now to FIGS. 2 and 3A, the processor 208 is communicably coupled to the drive unit 202. Further, the processor 208 is configured to receive a desired mass flow rate $W_{req}$ of the outlet airflow F2 to meet a current loading on the cabin blower system 100. The desired mass flow rate $W_{req}$ is received from the airframe system 110. The processor 208 is further configured to receive an operating pressure range P1 of a pressure of the outlet airflow F2. The operating pressure range P1 may include a minimum value of pressure and a maximum value of pressure required for safe operation of the airframe system 110. The processor 208 is further configured to receive an operating temperature range T1 of a temperature of the outlet airflow F2. The operating temperature range T1 may include a minimum value of temperature and a maximum value of temperature required for safe operation of the airframe system 110. The processor 208 is further configured to receive an operating speed range N of the at least one compressor 108 of the blower unit 106. The operating speed range N may include a minimum value of speed and a maximum value of speed required for safe operation of the airframe system 110.

The processor 208 is further configured to receive measurements of an inlet temperature $T_A$ and an inlet pressure

$P_A$ of the inlet airflow F1 at the inlet 102 of the blower unit 106. The processor 208 is further configured to receive a previous operating condition of the blower unit 106. In an example, the previous operating condition may represent a value for operating conditions during the first execution of the cabin blower system 100. The processor 208 is further configured to receive a current speed of the at least one compressor 108. The processor 208 is further configured to determine an estimated power consumption $\hat{y}$ of the blower unit 106 by using the inlet temperature $T_A$, the inlet pressure $P_A$, the current speed of the at least one compressor 108, and the previous operating condition of the blower unit 106 in the predetermined blower dataset 210. The processor 208 is further configured to determine a current power consumption $y$ of the blower unit 106. Further, the current speed of the at least one compressor 108 and the current power consumption $y$ may be determined as per current speed command signals CS4 for the compressor 108 that are currently being provided to the drive unit 202 by the processor 208, the current power consumption $y$ may also be determined based on power being consumed by the drive unit 202 to operate the blower unit 106, or a combination thereof.

The processor 208 is further configured to determine an estimated operating condition $\beta$ of the blower unit 106 by using the current power consumption $y$ and the estimated power consumption $\hat{y}$ of the blower unit 106 in the predetermined blower dataset 210. It should be noted that the processor 208 compares the current power consumption $y$ with the estimated power consumption $\hat{y}$ on a real-time basis. Further, the processor 208 runs in a loop and is configured to determine the estimated power consumption $\hat{y}$ of the blower unit 106, determine the current power consumption $y$ of the blower unit 106, and determine the estimated operating condition $\beta$ of the blower unit 106 continuously. Thus, the processor 208 constantly refines the estimated operating condition $\beta$, and the various steps repeat constantly as part of background calculations. In other words, the processor 208 keeps checking the changes in various operating parameters to determine the estimated operating condition $\beta$.

Further, the processor 208 is configured to receive an operating efficiency $\eta_M$ of the drive unit 202. The processor 208 is configured to determine the estimated operating condition $\beta$ further based on the operating efficiency $\eta_M$. The operating efficiency $\eta_M$ may represent a difference between the power consumed by the compressor 108 and the work done by the compressor 108. As the operating efficiency $\eta_M$ may affect a torque of the compressor 108, taking the operating efficiency $\eta_M$ into account to determine the estimated operating condition $\beta$ may improve an accuracy of the cabin blower control system 200.

The processor 208 is further configured to determine a desired speed $N_{req}$ of the at least one compressor 108 by using the desired mass flow rate $W_{req}$ and the estimated operating condition $\beta$ in the predetermined blower dataset 210. It should be noted that the estimated operating condition $\beta$ that is used to determine the desired speed $N_{req}$ corresponds to the operating condition at which the current power consumption $y$ matches with the estimated power consumption $\hat{y}$. The processor 208 is further configured to transmit a desired command signal CS1 to the drive unit 202 to operate the at least one compressor 108 at the desired speed $N_{req}$.

Further, the processor 208 is configured to determine a desired pressure ratio range of the blower unit 106 by using the inlet pressure $P_A$ and the operating pressure range P1. The processor 208 is configured to determine a desired temperature ratio range of the blower unit 106 by using the inlet temperature $T_A$ and the operating temperature range T1. Moreover, the processor 208 is configured to determine the desired speed $N_{req}$ of the at least one compressor 108 by further using the desired pressure ratio range, the desired temperature ratio range, the operating speed range N, and the estimated operating condition $\beta$ in the predetermined blower dataset 210. Thus, the processor 208 is configured to take into account the operating pressure range P1, the operating temperature range T1, the operating speed range N, and the estimated operating condition $\beta$ to determine the desired speed $N_{req}$ of the at least one compressor 108. This way, the cabin blower control system 200 may ensure that the desired speed $N_{req}$ for delivering the outlet airflow F2 at the desired mass flow rate $W_{req}$ is determined, while respecting the minimum and maximum limits for temperature and pressure of the outlet airflow F2.

Further, the processor 208 is configured to receive an operating position range PR1 of the variable exit vane arrangement 112. Furthermore, the processor 208 is configured to determine a set of desired speeds $N_{req}$ of the at least one compressor 108 to achieve the desired mass flow rate $W_{req}$ for all positions of the variable exit vane arrangement 112 using the estimated operating condition $\beta$ in the mass flow dataset. The processor 208 is further configured to determine a combination of a desired position $\alpha$ of the variable exit vane arrangement 112 and the desired speed $N_{req}$ that satisfies each of the operating pressure range P1 and the operating temperature range T1 using the estimated operating condition $\beta$ in the predetermined blower dataset 210. Specifically, the desired position $\alpha$ is determined by using the desired mass flow rate $W_{req}$, the estimated operating condition $\beta$, and the operating position range PR1 in the predetermined blower dataset 210. The processor 208 is configured to transmit a vane command signal CS2 to the drive unit 202 to operate the variable exit vane arrangement 112 at the desired position $\alpha$.

Thus, the cabin blower control system 200 provides a sensorless multivariable control logic, capable of driving the cabin blower system 100 to a time-varying setpoint in air delivery conditions, i.e., mass flow, temperature, and pressure, by determining simultaneously the desired speed $N_{req}$ of the compressor 108 and the desired position $\alpha$ of the variable exit vane arrangement 112. Further, the cabin blower control system 200 simultaneously determines the desired speed $N_{req}$ and the desired position $\alpha$ to meet the desired mass flow rate $W_{req}$, while respecting the minimum and maximum limits for temperature and pressure of the outlet airflow F2.

In some embodiments, the desired speed $N_{req}$ of the at least one compressor 108 is determined without measuring any outlet conditions at the outlet 104 of the cabin blower system 100. The outlet conditions include at least a mass flow rate, a temperature, and a pressure of the outlet airflow F2. The cabin blower control system 200 provides an open-loop strategy that guarantees independence from the outlet conditions, which may eliminate the probability of sensor-related errors. For example, the cabin blower control system 200 may eliminate issues related to sensing dynamics and measurement noise related to temperature and pressure sensors.

The cabin blower control system 200 described herein may safely modulate the outlet airflow F2 to the set of desired conditions, that is, pressure, temperature, and mass flow conditions, while minimising fuel consumption of the cabin blower system 100, minimising over-pressure, and minimising over-temperature. The processor 208 of the cabin blower control system 200 executes a control logic to govern the cabin blower system 100 without the need to measure the outlet conditions of the outlet airflow F2. Thus, the cabin blower control system 200 does not require the use of sensors. Further, the cabin blower control system 200 may allow replacement of a conventional engine bleed-air system (EBAS) with the cabin blower system 100. In other words, the cabin blower control system 200 may allow the cabin blower system 100 to perform the same functionality that is currently conducted by the EBAS, while reducing fuel consumption. Further, the outlet airflow F2 may service other sub-systems, such as, an environmental control system (ECS) or a wing anti-icing subsystem. Further, replacement of the EBAS with the cabin blower system 100 having the cabin blower control system 200 may improve passenger comfort, may eliminate the risk of fumes leakage into an aircraft cabin decoupling cabin air from the engine core airflow A (see FIG. 1), may improve efficiency of the gas turbine engine 10 (see FIG. 1) of the aircraft, and may minimise an amount of energy thrown overboard by reducing the amount of pressure regulation and cooling required.

The cabin blower control system 200 may allow the blower unit 106 to operate efficiently, and in an open-loop manner by eliminating the need to measure the outlet conditions, while preserving the capability of adapting to changing operating conditions. Further, the cabin blower control system 200 may be able to adapt to changes in external operating conditions by monitoring the current power consumption $y$ of the blower unit 106. Furthermore, the cabin blower control system 200 can be used to determine the desired speed $N_{req}$ of any compressor as the processor 208 makes use of the predetermined blower dataset 210 to determine the desired speed $N_{req}$. Thus, if the compressor 108 of the blower unit 106 needs to be redesigned, no additional work may be required for implementing the cabin blower control system 200, as only updating the predetermined blower dataset 210 will readapt the cabin blower control system 200 to the new compressor. Moreover, the processor 208 determines the estimated operating condition $\beta$ to determine the desired speed $N_{req}$ of the compressor 108. Thus, the control strategy described herein may change dynamically with changes in the external operating conditions. As the cabin blower control system 200 eliminates the requirement of instrumentation, such as sensors, at the outlet 104 of the cabin blower system 100, the cabin blower control system 200 may be simple to implement, may be reliable in operation, may be cost-effective, and may have lower weight.

The control strategy described in the present disclosure may be applied to other compression systems or pumps to regulate speed and geometry where mass flow control is needed, subject to temperature and pressure constraints. Further, the control strategy described in the present disclosure may be used to monitor key parameters in compression or pump systems, or as synthetic sensors for determining redundancy in systems where measurements are available.

**FIG. 3A** is a block diagram depicting various functions performed by the processor 208 of the controller 204. Referring to FIG. 3A, the processor 208 receives the desired mass flow rate $W_{req}$ at a function block 302. At the function block 302, the processor 208 performs a translation function. The operating pressure range P1 of the outlet airflow F2, the operating temperature range T1 of the outlet airflow F2, and the operating speed range N of the at least one compressor 108 of the blower unit 106 are also received at the function block 302. The processor 208 also receives the operating position range PR1 of the variable exit vane arrangement 112 at the function block 302. It should be noted that the desired mass flow rate $W_{req}$, the operating pressure range P1, the operating temperature range T1, and the operating speed range N are defined by the airframe system 110 in absolute units. However, the predetermined blower dataset 210 is defined in terms of quasidimensionless units. Accordingly, at the function block 302, the processor 208 translates the requirements that are defined in absolute units to quasidimensionless units, using the inlet pressure $P_A$ and the inlet temperature $T_A$.

The transformations performed by the processor 208 at the function block 302 are listed below,

Eq. (1) shows calculation of a quasidimensionless desired mass flow rate $W_{c_{req}}$ as a function of the desired mass flow rate $W_{req}$, the inlet temperature $T_A$, and the inlet pressure $P_A$.

$$W_{c_{req}} = \frac{W_{req}\sqrt{T_A}}{P_A} \qquad (1)$$

Eq. (2) shows calculation of a quasidimensionless minimum/maximum pressure ratio $\pi_{min/max}$ as a function of a minimum/maximum outlet pressure $P_{B min/max}$ and the inlet pressure $P_A$. A quasidimensionless pressure range $P_C$ may be calculated using Eq. (2).

$$\pi_{min/max} = \frac{P_{B\,min/max}}{P_A} \qquad (2)$$

Eq. (3) shows calculation of a quasidimensionless minimum/maximum temperature ratio $\phi_{min/max}$ as a function of a minimum/maximum outlet temperature $T_{B\,min/max}$ and the inlet temperature $T_A$. A quasidimensionless temperature range $T_C$ may be calculated using Eq. (3).

$$\phi_{min/max} = \frac{T_{B\,min/max}}{T_A} \qquad (3)$$

Eq. (3) shows calculation of a quasidimensionless operating speed range $N_c$ as a function of a minimum or maximum limit for a rotational speed range $N_{min/max}$ of the at least one compressor 108 and the inlet temperature $T_A$.

$$N_c = \frac{N_{min/max}}{\sqrt{T_A}} \qquad (3)$$

It should be noted that the operating position range PR1 does not need to be translated.

Further, at a function block 304, the processor 208 translates a quasidimensionless desired speed $N_{Creq}$ that is calculated at a function block 310 to the desired speed $N_{req}$ in absolute units. Thus, the quasidimensionless desired speed $N_{Creq}$ is received at a function block 304. At the function block 304, the processor 208 also receives the inlet pressure $P_A$ and the inlet temperature $T_A$ in absolute units. Further, at the function block 304, the processor 208 converts the quasidimensionless desired speed $N_{Creq}$ to the desired speed $N_{req}$ in absolute units, using the inlet pressure $P_A$ and the inlet temperature $T_A$. Based on the desired speed $N_{req}$, the processor 208 transmits the desired command signal CS1 (see FIG. 2) and the vane command signal CS2 (see FIG. 2) to the drive unit 202.

The transformations performed by the processor 208 at the function block 304 are listed below, Eq. (4) shows calculation of the desired speed $N_{req}$ as a function of a quasidimensionless desired speed $N_{Creq}$ and the inlet temperature $T_A$.

$$N_{req} = N_{c\,req}\,\sqrt{T_A} \qquad (4)$$

Further, at a function block 306, the processor 208 receives the inlet temperature $T_A$ and the inlet pressure $P_A$ of the inlet airflow F1. At the function block 306, the processor 208 also receives a power consumption $\dot{Q}$ of the drive unit 202 and the operating efficiency $\eta_M$ of the drive unit 202 in absolute units. The power consumption $\dot{Q}$ from the drive unit 202 represents work delivered by the drive unit 202. Further, at the function block 306, the processor 208 performs a translation function in regard to the power consumption $\dot{Q}$ from the drive unit 202. This is done so that the power consumption $\dot{Q}$ can be matched with the heat increase from the predetermined blower dataset 210 in quasidimensionless units. Specifically, at the function block 306, the processor 208 translates the power consumption $\dot{Q}$ and the operating efficiency $\eta_M$ of the drive unit 202 that are defined in absolute units to quasidimensionless units, using the inlet pressure $P_A$ and the inlet temperature $T_A$.

The transformations performed by the processor 208 at the function block 306 are listed below, Eq. (6) shows calculation of a quasidimensionless power consumption $\dot{Q}_c$ that represents work delivered by the drive unit 202 as a function of the power consumption $\dot{Q}$, the inlet pressure $P_A$, and the inlet temperature $T_A$.

$$\dot{Q}_c = \frac{\dot{Q}}{P_A\,\sqrt{T_A}} \qquad (6)$$

Eq. (7) shows calculation of a quasidimensionless operating efficiency $\eta_{Mc}$ of the drive unit 202, as a function of the operating efficiency $\eta_M$ and the inlet pressure $P_A$.

$$\eta_{Mc} = \frac{\eta_M}{P_A} \qquad (7)$$

This transformation in Eq. (7) originates from the expression in Eq. (5), which describes the work delivered by the drive unit 202 as the product of power by the operating efficiency $\eta_M$.

$$\frac{\eta_M \, \dot{Q}_\square}{P_A \sqrt{T_A}} = \frac{\eta_M}{P_A} \left( K_P \frac{(N_{req} - N_{blower})}{\sqrt{T_A}} + K_I \int \frac{(N_{req} - N_{blower})}{\sqrt{T_A}} \, dt \right), \tag{5}$$

where it can be seen that some low-level actuation control is assumed to achieve the desired speed $N_{req}$ by providing a power $\dot{Q}_{motor}$ to the compressor 308.

Application of the power transformation from Eq. (6), the speed transformation from Eq. (4), and the efficiency transformation from Eq. (7), leads to Eq. (6).

$$\eta_M \, \dot{Q}_{c\,motor} = \eta_{M_c} \left( K_P \left( N_{c\,req} - N_{c\,blower} \right) + K_I \int \left( N_{c\,req} - N_{c\,blower} \right) dt \right), \tag{6}$$

where it can be seen that the Eq. (6) now does not depend on the conditions at the inlet 102.

Further, at a function block 308, the processor 208 determines the current power consumption $y$ and the estimated power consumption $\hat{y}$. The processor 208 receives the inlet pressure $P_A$ and the inlet temperature $T_A$ of the inlet airflow F1 at the function block 308. The estimated power consumption $\hat{y}$ of the blower unit 106 is determined using the inlet temperature $T_A$ and the inlet pressure $P_A$ in the predetermined blower dataset 210.

Further, at the function block 308, the processor 208 also receives the quasidimensionless power consumption $\dot{Q}_c$ and the quasidimensionless operating efficiency $\eta_{M_c}$ of the drive unit 202 from the function block 306. The current power consumption $y$ is determined based on the quasidimensionless power consumption $\dot{Q}_c$ and the quasidimensionless operating efficiency $\eta_{M_c}$ of the drive unit 202. Further, the processor 208 determines the estimated operating condition $\beta$ of the blower unit 106 by using the current power consumption $y$ and the estimated power consumption $\hat{y}$ of the blower unit 106 in the predetermined blower dataset 210.

The control logic executed by the processor 208 at the function block 308 will now be described in detail. The determination of the estimated operating condition $\beta$ relies on availability of the predetermined blower dataset 210, the estimated power consumption $\hat{y}$, and the current power consumption $y$. The processor 208 may use a continuous-time extended Kalman Filter as an unknown input observer, in order to determine the estimated operating condition $\beta$. The general design principles for unknown input observer for parameter estimation, and continuous time Kalman filtering are known in the art.

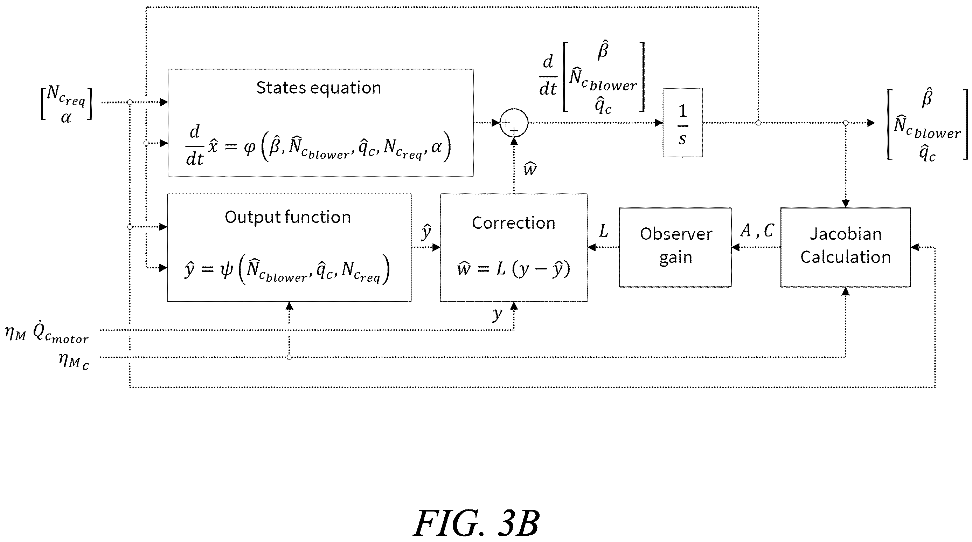

An overview of the function can be seen in **FIG. 3B,** where the basic structure of a non-linear observer is shown. The corrections are performed by means of a matrix $L$ that multiplies the differences between the estimated power consumption $\hat{y}$ and the current power consumption $y$ that represents the work delivered by the drive unit 202 (see FIG. 2), as defined in Eq. (5).

The observer gain is recalculated dynamically implementing the equations for a continuous time Kalman filter, which in turn depends on the system linear matrices. These matrices ($A$ and $C$) are linearisation of the non-linear dynamics at the estimation point, which completes the extended Kalman filter implementation for non-linear systems.

Some of the different functions illustrated in FIG. 3B will now be described in detail:

- Model of the system: In order to implement this technique, the system is modelled in quasidimensionless units with the compressor 108 (see FIG. 2) dynamics, in Eq. (7), the drive unit 202 (see FIG. 2) dynamics, in Eq. (8), and the estimated operating condition $\beta$ regarded as a random walk, in Eq. (9).

$$\frac{d}{dt} N_{c\,blower} = \frac{\eta_M \, \dot{Q}_{c\,motor} - \dot{Q}_{c\,blower}}{J \, N_{c\,blower}} + w_N, \tag{7}$$

$$\frac{d}{dt} q_c = N_{c\,req} - N_{c\,blower} + w_q, \tag{8}$$

$$\frac{d}{dt} \beta = w_\beta, \tag{9}$$

where variables $w_N$, $w_q$, and $w_\beta$ are random variables representing the uncertainty of the models, and the drive unit 202 state $q_c$ is the integral of the error in the speed part of the PI controller structure. It should be noted that the control strategy described herein is exemplary, and the PI controller structure is provided as an example. Accordingly, any other control strategies or control structures may be implemented. The speed of the compressor 108 is modelled following Newtonian dynamics, where $J$ is the mass moment of inertia in the appropriate units. The quasidimensionless work done by the compressor 108 to the fluid denoted by $\dot{Q}_{c_{blower}}$ is defined by Eq. (10), which is obtained by applying the transformations described in Eq. (1) and Eq. (6), and the definition of isentropic efficiency from Eq. (25) to the definition of work done by the compressor 108 to a fluid.

$$\dot{Q}_{c_{blower}} = W_c\, c_p\, \frac{\pi^{\frac{\gamma-1}{\gamma}} - 1}{\eta_s}, \qquad (10)$$

where $c_p$ is the specific heat capacity of air evaluated at the average temperature.

The output of the system $y$ is chosen as the product of the operating efficiency $\eta_M$ and the work done by the drive unit 202 represented by $\dot{Q}_{c_{motor}}$, which was defined in Eq. (6). The whole state-space representation of the system can be written as per Eq. (11) and Eq. (12).

$$\frac{d}{dt}x = \frac{d}{dt}\begin{bmatrix} \beta \\ N_{c_{blower}} \\ q_c \end{bmatrix} \rightarrow \frac{d}{dt}x = \varphi\left(\beta, N_{c_{blower}}, q_c, N_{c_{req}}, \alpha\right) + w, \qquad (11)$$

$$y = \eta_M\, \dot{Q}_{c_{motor}} + v \rightarrow y = \psi\left(N_{c_{blower}}, q_c, N_{c_{req}}\right) + v, \qquad (12)$$

where the state $x$ is defined by the three dynamic variables from Eq. (7) to (9), the array $w$ contains the three uncertainties, $y$ is the current power consumption, and v is a random variable representing measurement noise.

- State equation: Using the model chosen to represent the system, the state equation is built as per Eq. (13) and Eq. (14).

$$\frac{d}{dt}\hat{x} = \varphi\left(\hat{\beta}, \widehat{N}_{c_{blower}}, \hat{q}_c, N_{c_{req}}, \alpha\right) + \widehat{w}, \qquad (13)$$

$$\hat{y} = \psi\left(\widehat{N}_{c_{blower}}, \hat{q}_c, N_{c_{req}}\right), \qquad (14)$$

where $\hat{w}$ is the estimated state (which includes the estimated operating condition $\beta$), $\hat{y}$ is the estimated power consumption, used to form the correction $\hat{w}$ when compared to the current power consumption $y$, as described by Eq. (15), where $L$ is the observer gain.

$$\widehat{w} = L\,(y - \hat{y}), \qquad (15)$$

- Observer gain: The correction to the estimated state dynamics is done by multiplying the error in the measurement estimation by a matrix gain $L$, the observer gain.

This gain is calculated dynamically using the equations for a continuous-time Kalman filter implementation, as per Eq. (16) and (17).

$$\frac{d}{dt}P = AP + PA^T + M - (CP)^T R(CP), \qquad (16)$$

$$L = (CP)^T R^{-1}, \qquad (17)$$

where the matrix variable $P$ is the well-known Lyapunov cost, and the matrices $A$ and $C$ are a linearization of the system matrices, i.e., the system Jacobian, obtained dynamically. The variables $M \in \mathbb{R}^{3\times3}$ and $R \in \mathbb{R}^{1}$ represent respectively the covariance of the model uncertainty ( $M = \mathbb{E}[ww^T]$ ), and the covariance of the measurement noise

$(\ R = \mathbb{E}[vv^T]\ )$.

- Jacobian calculation: In order to complete the extended Kalman filter implementation, the Jacobian of the system is obtained dynamically so the correction gain can be updated as the nonlinear functions change with the operating conditions.

  The Jacobian is calculated by differentiation, and therefore a step size has to be chosen ($\delta$), this step should be chosen small enough so the dynamics can be considered linear. The Jacobian matrices are described by Eq. (18) to (21).

$$A = \begin{bmatrix} 0 & 0 & 0 \\ A_{21} & A_{22} & 0 \\ 0 & -1 & 0 \end{bmatrix}, \tag{18}$$

$$A_{21} = \frac{\varphi_2\left((1+\delta_\beta)\,\hat{\beta}, \widehat{N}_{c_{blower}}, \hat{q}_c, N_{c_{req}}, \alpha\right) - \varphi_2\left(\hat{\beta}, \widehat{N}_{c_{blower}}, \hat{q}_c, N_{c_{req}}, \alpha\right)}{\delta_\beta\,\hat{\beta}}, \tag{19}$$

$$A_{22} = \frac{\varphi_3\left(\hat{\beta}, (1+\delta_N)\,\widehat{N}_{c_{blower}}, \hat{q}_c, N_{c_{req}}, \alpha\right) - \varphi_3\left(\hat{\beta}, \widehat{N}_{c_{blower}}, \hat{q}_c, N_{c_{req}}, \alpha\right)}{\delta_N\,\widehat{N}_{c_{blower}}}, \tag{20}$$

$$C = \begin{bmatrix} 0 & -\eta_{M_c}K_P & \eta_{M_c}K_I \end{bmatrix}, \tag{21}$$

With regards to tuning, this control logic only needs correct choosing of the uncertainty and noise covariance matrices for the state equation, and the $\delta$ step for the Jacobian linearization.

Referring again to FIG. 3A, at the function block 308, the processor 208 receives the estimated operating condition $\beta$ from the function block 306 and the quasidimensionless desired mass flow rate $W_{C_{req}}$ from the function block 302. At the function block 310, the processor 208 also receives the operating pressure range $P_C$ of the outlet airflow F2 from the function block 302 to determine the desired pressure ratio range of the blower unit 106 by using the inlet pressure $P_A$ and the operating pressure range P1. Further, at the function block 310, the processor 208 also receives the operating temperature range $T_C$ of the temperature of the outlet airflow F2 to determine the desired temperature ratio range of the blower unit 106 by using the inlet temperature $T_A$ and the operating temperature range T1. At the function block 310, the processor 208 also receives the operating speed range $N_C$ of the at least one compressor 108 of the blower unit 106, and the operating position range PR1 of the variable exit vane arrangement 112 from the function block 302.

Further, the quasidimensionless desired speed $N_{C_{req}}$ of the at least one compressor 108 and the desired position $\alpha$ of the variable exit vane arrangement 112 are determined at the function block 310. The quasidimensionless desired speed $N_{C_{req}}$ is generated by using the quasidimensionless desired mass flow rate $W_{C_{req}}$, the estimated operating condition $\beta$, the desired pressure ratio range of the blower unit 106, the desired temperature ratio range of the blower unit 106, and the operating speed range N in the predetermined blower dataset 210. Further, the desired position $\alpha$ is generated by using the quasidimensionless desired mass flow rate $W_{C_{req}}$, the quasidimensionless desired speed $N_{C_{req}}$, the estimated operating condition $\beta$, and the operating position range PR1 in the predetermined blower dataset 210.

The control logic applied by the processor 208 at the function block 310 will now be described in detail. The control logic consists of two main processes: an offline preparation of data, and an online computation of the quasidimensionless desired speed $N_{C_{req}}$ and the desired position $\alpha$ for a time-varying combination of estimated operating condition $\beta$, the quasidimensionless desired mass flow rate $W_{C_{req}}$, the operating pressure range $P_C$, the operating temperature range $T_C$, and the operating speed range $N_C$. An overview of the logic will be explained below.

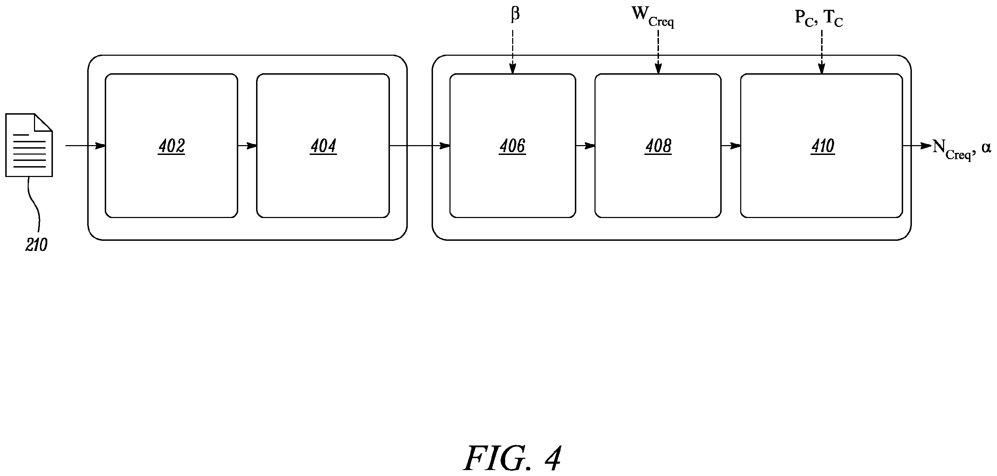

In the offline process, at a first step 402 depicted in **FIG. 4,** the data that is typically available as a flat structure, is re-structured to a multidimensional dataset forming the predetermined blower dataset 210, which are three non-linear lookup functions as per Eq. (22), where $W_c$ is the quasidimensionless mass flow, $\pi$ is the pressure ratio, and $\eta_s$ is the isentropic efficiency. These functions depend on the quasidimensionless operating speed range $N_c$ of the compressor 108, the desired position $\alpha$ of the variable exit vane arrangement 112, and the estimated operating condition $\beta$.

$$W_c = f_1(N_c, \alpha, \beta), \tag{22}$$

$$\pi = f_2(N_c, \alpha, \beta),$$

$$\eta_s = f_3(N_c, \alpha, \beta).$$

At the next step 404, a transformation of the predetermined blower dataset 210 is performed by switching the first dimensions ($N_c$ by $W_c$), obtaining the new set of functions in Eq. (23) to form inverted datasets 212, 214, 216. The process at step 404 may be described as an inversion of each of the pressure ratio dataset, the isentropic efficiency dataset, and the mass flow dataset to form an inverted pressure ratio dataset 212, an inverted temperature ratio dataset 214, and an inverted mass flow dataset 216, respectively.

$$N_c = g_1(W_c, \alpha, \beta),$$

$$\pi = g_2(W_c, \alpha, \beta), \tag{23}$$

$$\eta_s = g_3(W_c, \alpha, \beta).$$

At the step 404, the inverted temperature ratio dataset 214 is generated. For this, the definition of isentropic temperature ratio as a function of pressure ratio, for an ideal gas, is used as per Eq. (24).

$$\left(\frac{T_B}{T_A}\right)_{isentropic} = \left(\frac{P_B}{P_A}\right)^{\frac{\gamma-1}{\gamma}}, \tag{24}$$

where $\gamma$ is the specific heat ratio of the gas.

Finally, using the definition for isentropic efficiency for adiabatic compressors as defined in Eq. (25) and the definition for isentropic temperature ratio from Eq. (24), the inverted temperature ratio dataset 214 is obtained as in Eq. (26).

$$\eta_s = \frac{\left(\frac{T_B}{T_A}\right)_{isentropic} - 1}{\left(\frac{T_B}{T_A}\right) - 1}, \tag{25}$$

$$\phi = \frac{T_B}{T_A} \rightarrow \phi = 1 + \frac{g_2(W_c, \alpha, \beta)^{\frac{\gamma-1}{\gamma}} - 1}{g_3(W_c, \alpha, \beta)}, \tag{26}$$

The steps 402, 404 are executed offline (prior to an execution by the processor 208) and depend uniquely on the predetermined blower dataset 210, which will be different depending on the compressor 108 to be used.

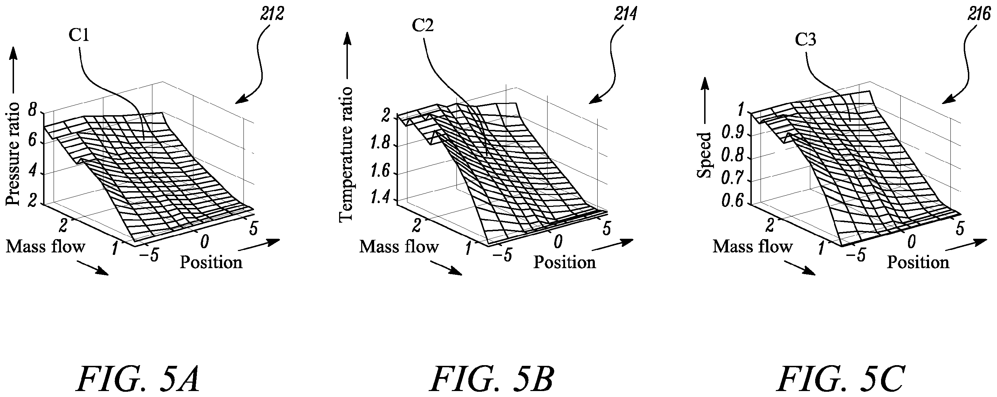

The following three steps 406, 408, 410 are performed online, that is, while the cabin blower control system 200 operates. At the step 406, the inverted datasets 212, 214, 216 from Eq. (23) are evaluated at the estimated operating condition $\beta$. The resulting functions, after setting $\beta = \hat{\beta}$, are 2-dimensional surfaces similar to the ones illustrated in FIGS 5A, 5B, and 5C. **FIG. 5A** illustrates the inverted pressure ratio dataset 212 for one value for the estimated operating condition $\beta$, with mass flow rates and the position plotted on the horizontal plane and pressure ratios plotted on the vertical plane. **FIG. 5B** illustrates the inverted temperature ratio dataset 214 for one value for the estimated operating condition $\beta$, with mass flow rates and the position plotted on the horizontal plane and temperature ratios plotted on the vertical plane. **FIG. 5C** illustrates the inverted mass flow dataset 216 for one value for the estimated operating condition $\beta$, with mass flow rates and the position plotted on the horizontal plane and speed of the compressor 108 plotted on the vertical plane.

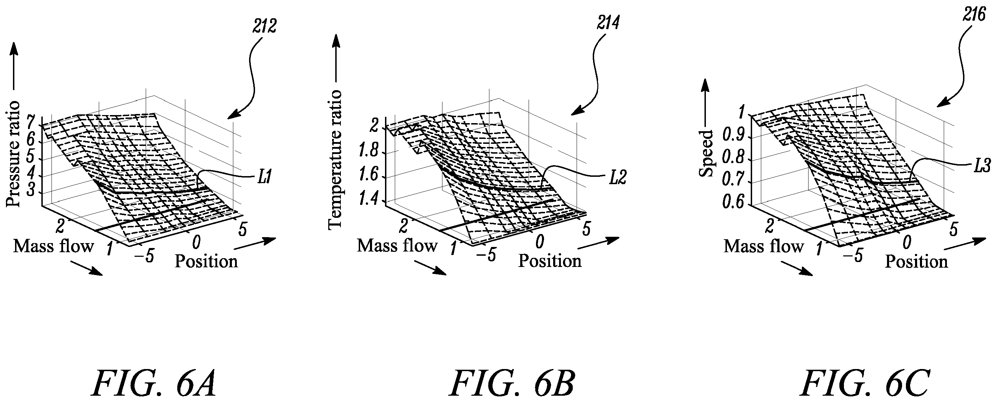

As shown in FIGS. 4 and 5A to 5C, at the step 408, the three compressor surfaces C1, C2, C3 are evaluated at the quasidimensionless desired mass flow rate $W_{C_{req}}$, which can be also time-varying. The evaluation of the compressor surfaces C1, C2, C3 at the quasidimensionless desired mass flow rate $W_{C_{req}}$ yields a set of three lines L1, L2, L3 (shown in FIGS. 6A, 6B, 6C).

Referring now to FIG. 4 and **FIGS. 6A to 6C**, finally, at a step 410, the lines L1, L2, L3 are used to obtain the lower speed solution that achieves both minimum requirements of pressure and temperature ratios.

Error! Reference source not found.A, **7B, and 7C** illustrates the lines L1, L2, L3 obtained at the step 410 plotted in two dimensions, with the vertical dimension being the position of the variable exit vane arrangement 112, and the horizontal dimension being the corresponding variable that is pressure ratio, temperature ratio, and speed, respectively.

As shown in **Error! Reference source not found.A,** 7B, and 7C, for the example chosen, it can be seen how the combination of speed and geometry to achieve the minimum temperature ratio $T_{min}$ would yield a pressure ratio $P_{cal}$ that falls below the minimum pressure ratio $P_{min}$. From all the acceptable solutions, the one that needs the lowest speed is selected, to reduce the power consumption of the compressor 108. The combination of the quasidimensionless desired speed $N_{Creq}$ and the desired position $\alpha$ can be then extracted from the line L3. Based on the determination of the quasidimensionless desired speed $N_{Creq}$ and the desired position $\alpha$, the processor 208 (see FIG. 2) generates and transmits the desired command signal CS1 (see FIG. 2) and the vane command signal CS1 (see FIG. 2).

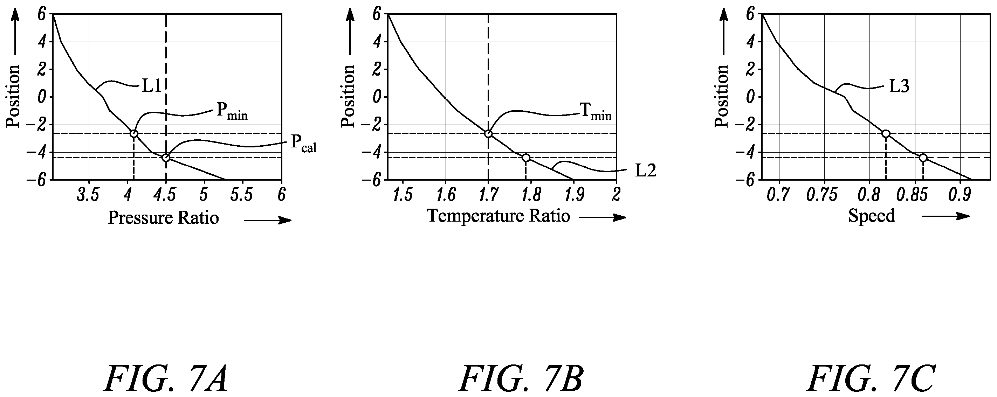

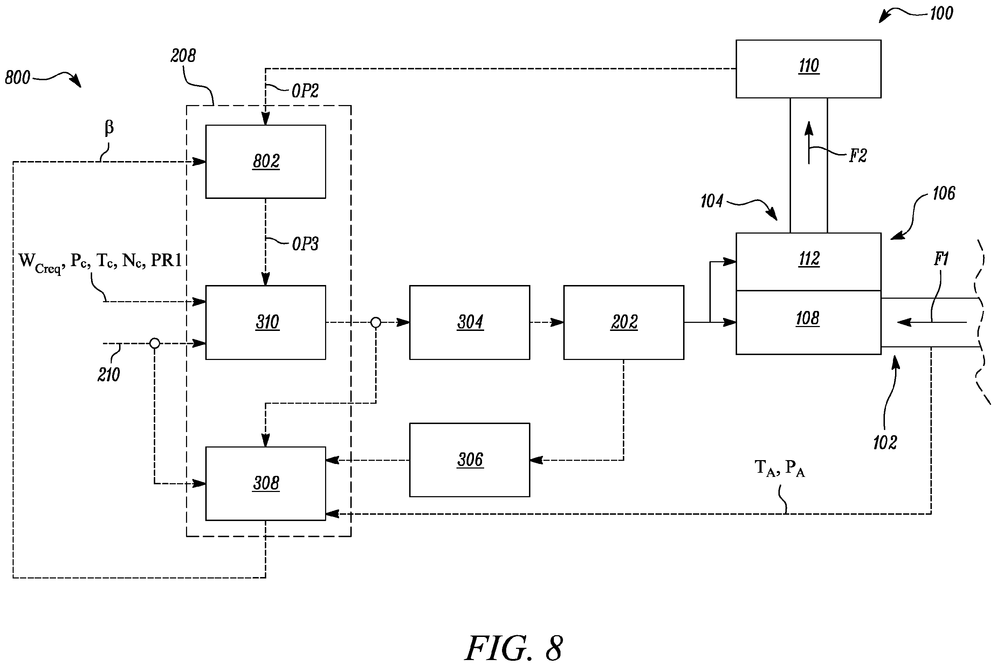

**FIG. 8** is a block diagram of a cabin blower control system 800 for controlling the cabin blower system 100, according to another embodiment of the present disclosure. The cabin blower control system 800 is similar to the cabin blower control system 200 described in relation to FIGS. 1 to 7C. In some embodiments, the processor 208 is further configured to receive a detected operating condition OP2 of the cabin blower system 100 from the at least one airframe system 110 positioned downstream of the cabin blower system 100. The processor 208 is further configured to determine if the detected operating condition OP2 of the cabin blower system 100 corresponds to the estimated operating condition $\beta$ of the blower unit 106 based on a comparison between the detected operating condition OP2 and the estimated operating condition $\beta$.

The detected operating condition OP2 may be used in a monitoring step to detect performance deviations, or system degradation. The detected operating condition OP2 may be used to assess a deviation between the detected operating condition OP2 and the estimated operating condition $\beta$, in order to assess the predetermined blower dataset 210 (see FIG. 3A) or one or more components of the cabin blower control system 200. The detected operating condition OP2 may be received at a function block 802. Further, in such an embodiment, the function block 802 may also receive the estimated operating condition $\beta$ from the function block 308. The processor 208 determines an updated operating condition OP3 based on the analysis of the detected operating condition OP2 and the estimated operating condition $\beta$. The updated operating condition OP3 may be received at the function block 310 to determine the quasidimensionless desired speed $N_{Creq}$ and the desired position $\alpha$.

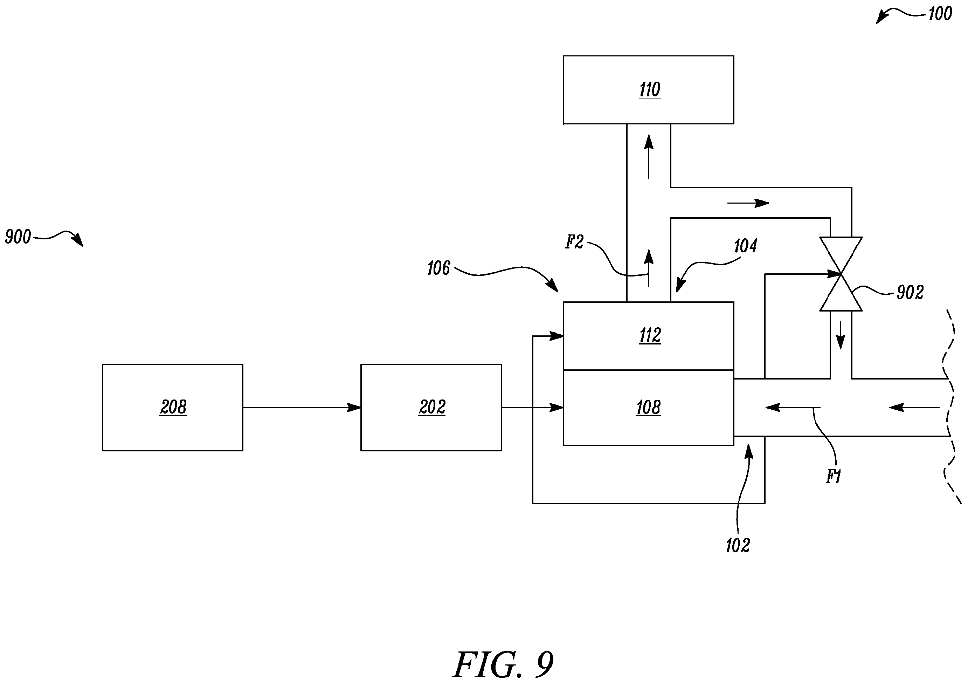

**FIG. 9** is a block diagram of a cabin blower control system 900 including a recirculation valve 902, according to yet another embodiment of the present disclosure. The cabin blower control system 900 is similar to the cabin blower control system 200 described in relation to FIGS. 1 to 7C. However, the cabin blower control system 900 further includes the recirculation valve 902 adapted to provide selective fluid communication between the outlet 104 of the cabin blower system 100 and the inlet 102 of the cabin blower system 100. The processor 208 is communicably coupled to the recirculation valve 902. The processor 208 is further configured to receive a desired temperature of the outlet airflow F2 to meet the current loading on the cabin blower system 100. The processor 208 is further configured to operate the recirculation valve 902 in an open state if the desired temperature of the outlet airflow F2 is below a predefined temperature threshold. The recirculation valve 902 may allow the cabin blower system 100 to rework a part of the fluid, which may in turn permit the cabin blower system 100 to reach higher temperatures for the same pressure ratio. This technique may be useful in a situation wherein the minimum outlet temperature of the outlet airflow F2 would take the pressure of the outlet airflow F2 to a high value. In such a situation, incorporation of the recirculation valve 902 may keep the pressure of the outlet airflow F2 at a lower level, while delivering the minimum outlet temperature of the outlet airflow F2.

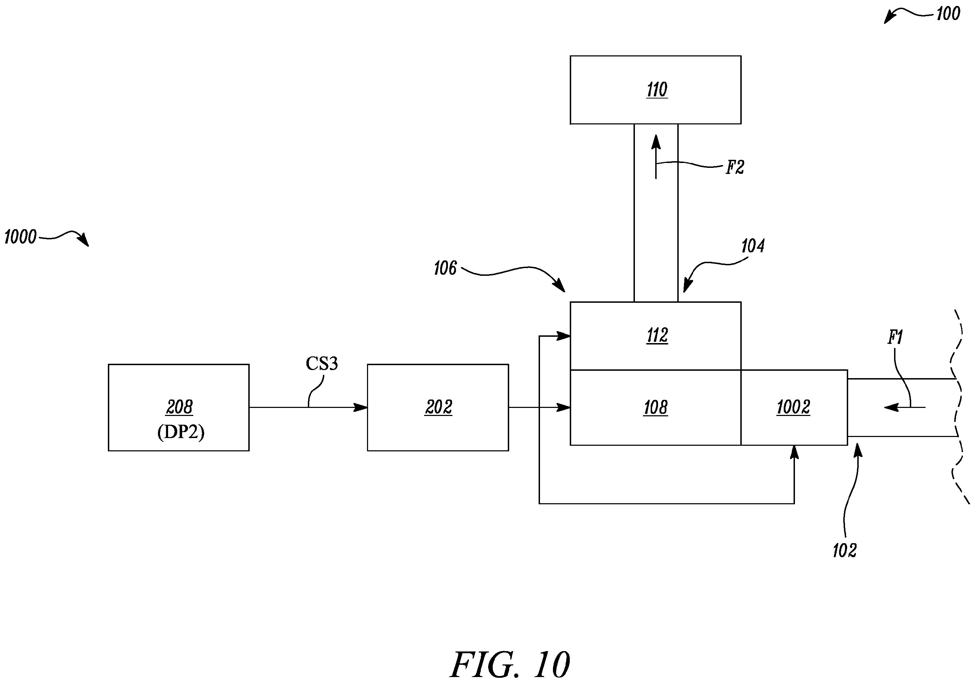

**FIG. 10** is a block diagram of a cabin blower control system 1000, according to yet another embodiment of the present disclosure. The cabin blower control system 1000 is similar to the cabin blower control system 200 described in relation to FIGS. 1 to 7C. However, the cabin blower control system 1000 includes a variable inlet vane arrangement 1002 configured to control the inlet airflow F1. In the illustrated embodiment of FIG. 10, the cabin blower control system 1000 is further configured to control the variable inlet vane arrangement 1002. Specifically, the drive unit 202 may control a position (i.e., a geometric position) of a plurality of guide vanes associated with the variable inlet vane arrangement 1002. In some embodiments, the pressure ratio dataset may further correlate the pressure ratio of the blower unit 106 with at least the operating condition of the blower unit 106, the compressor speed of the at least one compressor 108, and a position of the variable inlet vane arrangement 1002, the isentropic efficiency dataset may further correlate the isentropic efficiency of the blower unit 106 with at least the operating condition of the blower unit 106, the compressor speed of the at least one compressor 108, and the position of the variable inlet vane arrangement 1002, and the mass flow dataset may further correlate the mass flow through the blower unit 106 with at least the operating condition of the blower unit 106, the compressor speed of the at least one compressor 108, and the position of the variable inlet vane arrangement 1002. Further, the processor 208 is configured to determine a desired position DP2 of the variable inlet vane arrangement 1002 by using the desired mass flow rate $W_{req}$ and the estimated operating condition $\beta$ in the predetermined blower dataset 210. The processor 208 is configured to transmit a vane command signal CS3 to the drive unit 202 to operate the variable inlet vane arrangement 1002 at the desired position DP2.

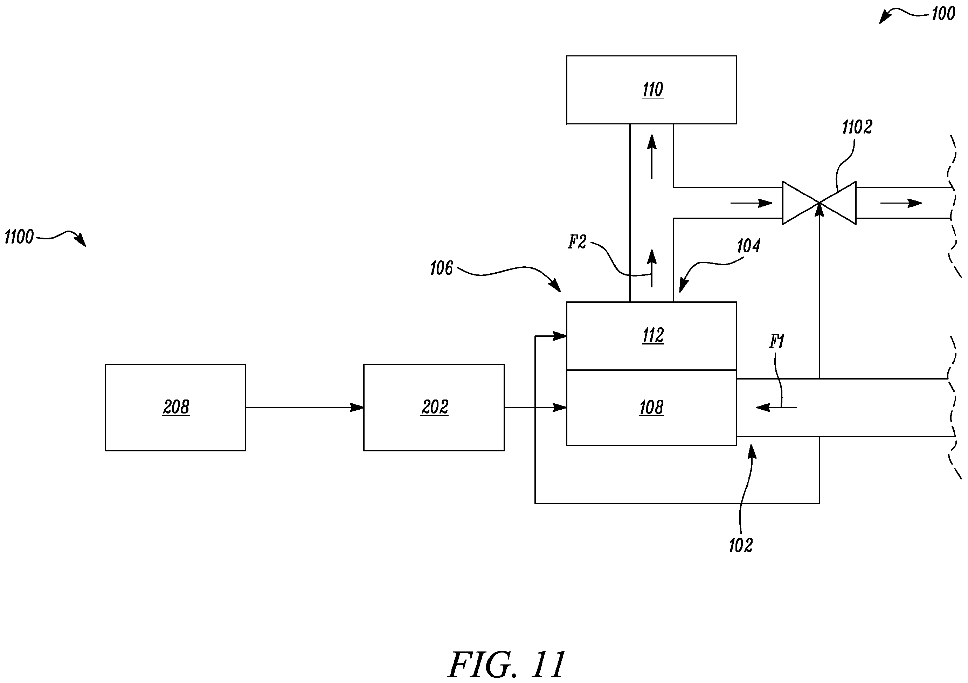

**FIG. 11** is a block diagram of a cabin blower control system 1100, according to yet another embodiment of the present disclosure. The cabin blower control system 1100 is similar to the cabin blower control system 200 described in relation to FIGS. 1 to 7C. However, the cabin blower control system 1100 further includes a release valve 1102 adapted to provide selective fluid communication between the outlet 104 of the cabin blower system 100 and the bypass duct 22 (see FIG. 1) downstream of the outlet 104 of the blower unit 106. The processor 208 is communicably coupled to the release valve 1102. The processor 208 is further configured to operate the release valve 1102 in an open state in case of a high pressure, a high temperature, or a high mass flow rate in the cabin blower system 100. As the compressor 108 may be physically attached to the gas turbine engine 10, it may not be possible to reduce the speed of the compressor 108 below a certain threshold value, which is governed by a desired engine speed and a turn-down capability of a variable speed drive system associated with the gas turbine engine 10 (see FIG. 1). Increasing the turn-down capability may add weight and physical bulk to the variable speed drive system, thus it may be desirable to optimize capability in relation to cost, size, and weight. However, if the airframe system 110 is requesting low mass flow rates and low pressures of the outlet airflow F2, it might not be possible to reduce the mass flow rate of the outlet airflow F2 to the value requested if the speed of the compressor 108 is constrained by the threshold value. Incorporation of the release valve 1102 may allow some amount of the outlet airflow F2 to be released to the bypass duct 22 or the environment/ambient, thereby decreasing the pressure and mass flow rate of air that is being supplied to the airframe system 110.

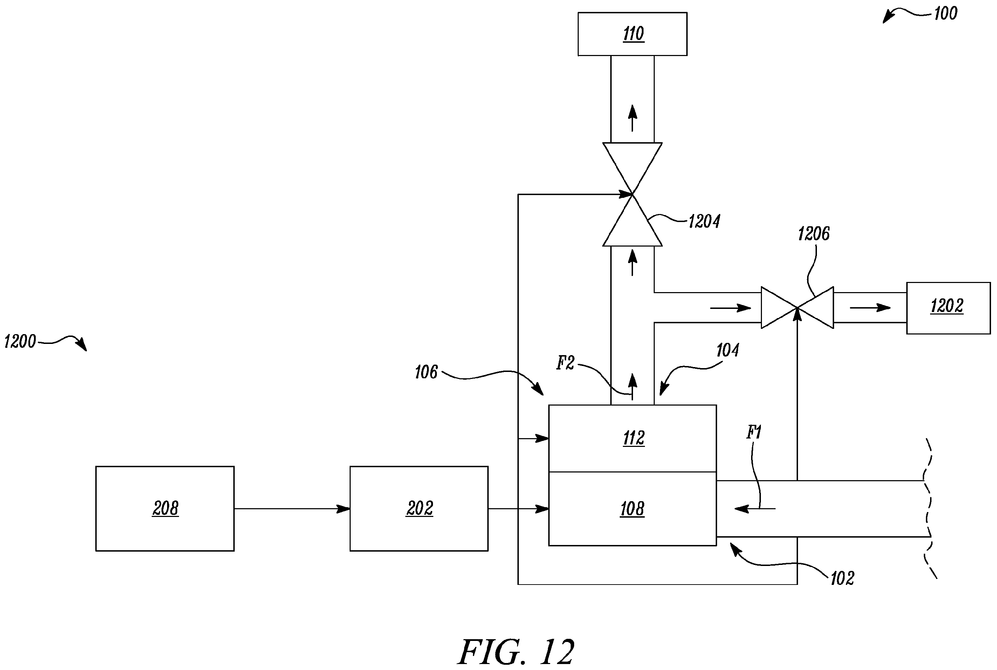

**FIG. 12** is a block diagram of a cabin blower control system 1200 for controlling the cabin blower system 100 that provides an airflow to multiple systems disposed downstream of the cabin blower system 100 in addition to the airframe system 110, according to yet another embodiment of the present disclosure. The cabin blower control system 1100 is similar to the cabin blower control system 200 described in relation to FIGS. 1 to 7C. However, the cabin blower system 100 may supply the outlet airflow F2 to the airframe system 110 and at least one secondary system 1202. In such embodiments, the cabin blower system 100 may include control valves disposed downstream of the outlet 104 of the cabin blower system 100. For example, the cabin blower system 100 may include a first valve 1204 that controls an airflow towards the airframe system 110. Additionally, the cabin blower system 100 may include a second valve 1206 that controls an airflow towards the secondary system 1202. The first valve 1204 and the second valve 1206 may provide airflows at different mass flow rates and pressure conditions to the airframe system 110 and the secondary system 1202, respectively.

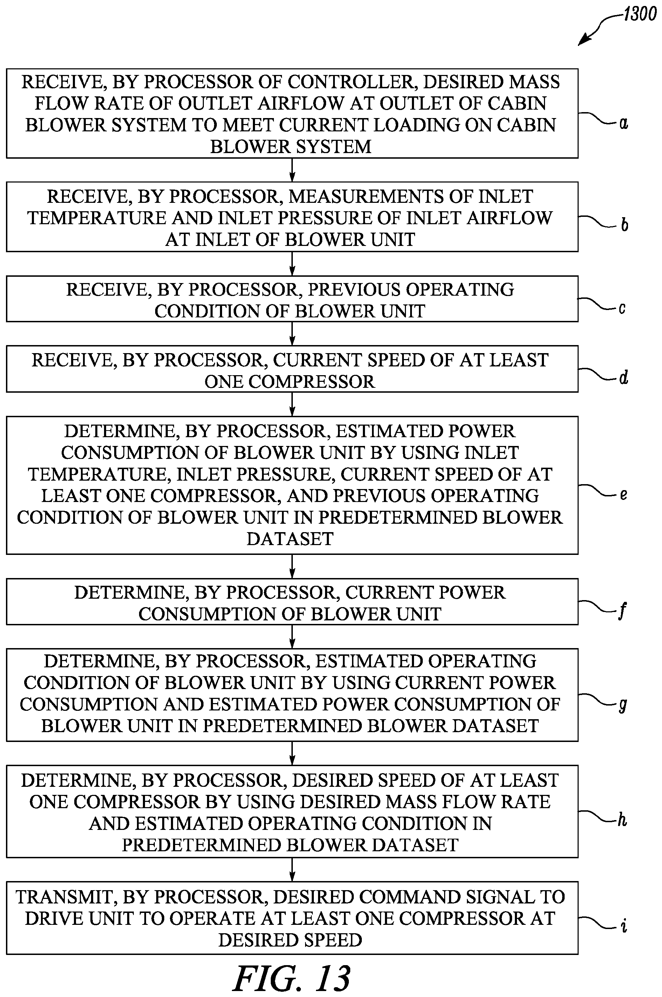

**FIG. 13** is a flowchart for a method 1300 of controlling the cabin blower system 100. Referring to FIGS. 2, 3A, and 13, the cabin blower system 100 includes the inlet 102, the outlet 104, and the blower unit 106.

The method 1300 includes the step of a) receiving, by the processor 208 of the controller 204, the desired mass flow rate $W_{req}$ of the outlet airflow F2 at the outlet 104 of the cabin blower system 100 to meet the current loading on the cabin blower system 100. The controller 204 includes the memory 206 configured to store the predetermined blower dataset 210 for the blower unit 106 of the cabin blower system 100. The blower unit 106 includes the at least one compressor 108 that is configured to receive the inlet airflow F1 from the inlet 102 and generate the outlet airflow F2 at the outlet 104. The predetermined blower dataset 210 includes at least the pressure ratio dataset correlating the pressure ratio of the blower unit 106 with at least the operating condition of the blower unit 106 and the compressor speed of the at least one compressor 108, the isentropic efficiency dataset correlating the isentropic efficiency of the blower unit 106 with at least the operating condition of the blower unit 106 and the compressor speed of the at least one compressor 108, and the mass flow dataset correlating the mass flow through the blower unit 106 with at least the operating condition of the blower unit 106 and the compressor speed of the at least one compressor 108. The operating condition of the blower unit 106 includes one or more operating parameters at the outlet 104 of the blower unit 106.

The method 1300 further includes the step of b) receiving, by the processor 208, measurements of the inlet temperature $T_A$ and the inlet pressure $P_A$ of the inlet airflow F1 at the inlet 102 of the blower unit 106.

The method 1300 further includes the step of c) receiving, by the processor 208, the previous operating condition of the blower unit 106.

The method 1300 further includes the step of d) receiving, by the processor 208, the current speed of the at least one compressor 108.

The method 1300 further includes the step of e) determining, by the processor 208, the estimated power consumption $\hat{y}$ of the blower unit 106 by using the inlet temperature $T_A$ and the inlet pressure $P_A$ in the predetermined blower dataset 210.

The method 1300 further includes the step of f) determining, by the processor 208, the current power consumption $y$ of the blower unit 106.

The method 1300 further includes the step of g) determining, by the processor 208, the estimated operating condition $\beta$ of the blower unit 106 by using the current power consumption $y$ and the estimated power consumption $\hat{y}$ of the blower unit 106 in the predetermined blower dataset 210.

The method 1300 further includes the step of h) determining, by the processor 208, the desired speed $N_{req}$ of the at least one compressor 108 by using the desired mass flow rate $W_{req}$ and the estimated operating condition $\beta$ in the predetermined blower dataset 210.

The method 1300 further includes the step of i) transmitting, by the processor 208, the desired command signal CS1 to the drive unit 202 to operate the at least one compressor 108 at the desired speed $N_{req}$. The drive unit 202 is operatively coupled to and configured to control the blower unit 106. The processor 208 is communicably coupled to the drive unit 202.

In some embodiments, the method 1300 further includes receiving, by the processor 208, the operating pressure range P1 of the pressure of the outlet airflow F2. The method 1300 further includes receiving, by the processor 208, the operating temperature range T1 of the temperature of the outlet airflow F2. The method 1300 further includes receiving, by the processor 208, the operating speed range N of the at least one compressor 108 of the blower unit 106. The method 1300 further includes determining, by the processor 208, the desired pressure ratio range of the blower unit 106 by using the inlet pressure $P_A$ and the operating pressure range P1. The method 1300 further includes determining, by the processor 208, the desired temperature ratio range of the blower unit 106 by using the inlet temperature $T_A$ and the operating temperature range T1. The method 1300 further includes determining, by the processor 208, the desired speed $N_{req}$ of the at least one compressor 108 by further using the desired pressure ratio range, the desired temperature ratio range, the operating speed range N, and the estimated operating condition $\beta$ in the predetermined blower dataset 210.

In some embodiments, the blower unit 106 further includes the variable exit vane arrangement 112 configured to control the outlet airflow F2. The drive unit 202 is further configured to control the variable exit vane arrangement 112. The pressure ratio dataset further correlates the pressure ratio of the blower unit 106 with at least the operating condition of the blower unit 106, the compressor speed of the at least one compressor 108, and the position of the variable exit vane arrangement 112, the isentropic efficiency dataset further correlates the isentropic efficiency of the blower unit 106 with at least the operating condition of the blower unit 106, the compressor speed of the at least one compressor 108, and the position of the variable exit vane arrangement 112, and the mass flow dataset further correlates the mass flow through the blower unit 106 with at least the operating condition of the blower unit 106, the compressor speed of the at least one compressor 108, and the position of the variable exit vane arrangement 112. The method 1300 further includes determining, by the processor 208, the set of desired speeds $N_{req}$ of the at least one compressor 108 to achieve the desired mass flow rate $W_{req}$ for all positions of the variable exit vane arrangement 112 using the predetermined blower dataset 210. The method 1300 further includes determining, by the processor 208, the combination of the desired position $\alpha$ of the variable exit vane arrangement 112 and the desired speed $N_{req}$ that satisfies each of the operating pressure range P1 and the operating temperature range T1 using the estimated operating condition $\beta$ in the predetermined blower dataset 210. The method 1300 further includes transmitting, by the processor 208, the vane command signal CS2 to the drive unit 202 to operate the variable exit vane arrangement 112 at the desired position $\alpha$.

In some embodiments, the method 1300 further includes receiving, by the processor 208, the operating efficiency $\eta_M$ of the drive unit 202. The method 1300 further includes determining, by the processor 208, the estimated operating condition $\beta$ further based on the operating efficiency $\eta_M$.

In some embodiments, the desired speed $N_{req}$ of the at least one compressor 108 is determined at the step (h) without measuring any outlet conditions at the outlet 104 of the cabin blower system 100. The outlet conditions include at least the mass flow rate, the temperature, and the pressure of the outlet airflow F2.

Referring to FIGS. 8 and 13, in some embodiments, the method 1300 further includes receiving, by the processor 208, the detected operating condition OP2 of the cabin blower system 100 from the at least one airframe system 110 positioned downstream of the cabin blower system 100. The method 1300 further includes determining, by the processor 208, if the detected operating condition OP2 of the cabin blower system 100 corresponds to the estimated operating condition $\beta$ of the blower unit 106 based on the comparison between the detected operating condition OP2 and the estimated operating condition $\beta$.

Referring to FIGS. 9 and 13, in some embodiments, the cabin blower control system 900 further includes the recirculation valve 902 adapted to provide selective fluid communication between the outlet 104 of the cabin blower system 100 and the inlet 102 of the cabin blower system 100. The processor 208 is communicably coupled to the recirculation valve 902. The method 1300 further includes receiving, by the processor 208, the desired temperature of the outlet airflow F2 to meet the current loading on the cabin blower system 100. The method 1300 further includes operating, by the processor 208, the recirculation valve 902 in the open state if the desired temperature of the outlet airflow F2 is below the predefined temperature threshold.

Referring to FIGS. 11 and 13, in some embodiments, the cabin blower control system 1100 further includes the release valve 1102 adapted to provide selective fluid communication between the outlet 104 of the cabin blower system 100 and the bypass duct 22 (see FIG. 1) downstream of the outlet 104 of the blower unit. The processor 208 is communicably coupled to the release valve 1102. The method 1300 further includes operating, by the processor 208, the release valve 1102 in the open state in case of the high pressure, the high temperature, or the high mass flow rate in the cabin blower system 100.

The method 1300 described herein may safely modulate the outlet airflow F2 to the set of desired conditions, that is, pressure, temperature, and mass flow conditions, while minimising fuel consumption of the cabin blower system 100, minimising over-pressure, and minimising over-temperature. The method 1300 executes a control logic to govern the cabin blower system 100 without the need to measure the outlet conditions, that is, pressure, temperature, and mass flow

**EP 4 644 250 B1**

conditions of the outlet airflow F2 that delivered to the airframe system 110. Thus, the method 1300 does not require the use of sensors. Further, the method 1300 may allow replacement of the conventional EBAS with the cabin blower system 100. In other words, the method 1300 may allow the cabin blower system 100 to perform the same functionality that is currently conducted by the EBAS, while reducing fuel consumption. Further, the outlet airflow F2 that is modulated may service other sub-systems, such as, the ECS or the wing anti-icing subsystem. Further, the method 1300 may improve passenger comfort, may eliminate the risk of fumes leakage into the aircraft cabin by means of decoupling cabin air from engine core airflow, may improve efficiency of the gas turbine engine 10 of the aircraft, and may minimise an amount of energy thrown overboard by reducing the amount of pressure regulation and cooling required.

The method 1300 may allow the blower unit 106 to operate efficiently, and in an open-loop manner by eliminating the need to measure the outlet conditions, while preserving the capability of adapting to changing operating conditions. Further, the method 1300 may be able to adapt to changes in external operating conditions by monitoring the current power consumption $y$ of the blower unit 106. Furthermore, the method 1300 can be readily used to determine the desired speed $N_{req}$ of any compressor as the processor 208 makes use of the predetermined blower dataset 210 to determine the desired speed $N_{req}$. Thus, if the compressor 108 of the blower unit 106 needs to be replaced, no additional rework may be required for implementing the method 1300, as only updating the predetermined blower dataset 210 will readapt the method 1300 to the new compressor. Moreover, the processor 208 determines the estimated operating condition $\beta$ to determine the desired speed $N_{req}$ of the compressor 108. Thus, the method 1300 may adapt dynamically with changes in the external operating conditions. As the method 1300 eliminates the requirement of instrumentation, such as sensors, at the outlet 104 of the cabin blower system 100, the method 1300 may be simple to implement, may be reliable in operation, and may be cost-effective to implement.

The method 1300 described in the present disclosure may be applied to other compression systems or pumps to regulate speed and geometry where mass flow control is needed, subject to temperature and pressure constraints. Further, the method 1300 described in the present disclosure may be used to monitor key parameters in compression or pump systems, or as synthetic sensors for determining redundancy in systems where measurements are available.

**Claims**

1. A cabin blower control system (200, 800, 900, 1000, 1100, 1200) for controlling a cabin blower system (100), the cabin blower system (100) including an inlet (102), an outlet (104), and a blower unit (106), the cabin blower control system (200, 800, 900, 1000, 1100, 1200) comprising:

   a drive unit (202) configured to be operatively coupled to and configured to control the blower unit (106); and
   a controller (204) including a memory (206) and a processor (208) communicably coupled with the memory (206), wherein the memory (206) is configured to store a predetermined blower dataset (210) for the blower unit (106) of the cabin blower system (100), the blower unit (106) including at least one compressor (108) that is configured to receive an inlet airflow (F1) from the inlet (102) and generate an outlet airflow (F2) at the outlet (104), and wherein the processor (208) is configured to perform the following steps:

      a) receive a desired mass flow rate ($W_{req}$) of the outlet airflow (F2) to meet a current loading on the cabin blower system (100); and
      b) receive measurements of an inlet temperature ($T_A$) and an inlet pressure ($P_A$) of the inlet airflow (F1) at the inlet (102) of the blower unit (106);

   the cabin blower control system being **characterised in that**:

   the memory (206) is configured to store a predetermined blower dataset (210) for the blower unit (106) of the cabin blower system (100);
   the predetermined blower dataset (210) includes at least a pressure ratio dataset correlating a pressure ratio of the blower unit (106) with at least an operating condition of the blower unit (106) and a compressor speed of the at least one compressor (108), an isentropic efficiency dataset correlating an isentropic efficiency of the blower unit (106) with at least the operating condition of the blower unit (106) and the compressor speed of the at least one compressor (108), and a mass flow dataset correlating a mass flow through the blower unit (106) with at least the operating condition of the blower unit (106) and the compressor speed of the at least one compressor (108), the operating condition of the blower unit (106) including one or more operating parameters at the outlet (104) of the blower unit (106);
   the processor (208) is communicably coupled to the drive unit (202); and the processor (208) is configured to also perform the following steps:

c) receive a previous operating condition of the blower unit (106);

d) receive a current speed of the at least one compressor (108);

e) determine an estimated power consumption ($\hat{y}$) of the blower unit (106) by using the inlet temperature ($T_A$), the inlet pressure ($P_A$), the current speed of the at least one compressor (108), and the previous operating condition of the blower unit (106) in the predetermined blower dataset (210);

f) determine a current power consumption ($y$) of the blower unit (106);

g) determine an estimated operating condition ($\beta$) of the blower unit (106) by using the current power consumption ($y$) and the estimated power consumption ($\hat{y}$) of the blower unit (106) in the predetermined blower dataset (210);

h) determine a desired speed ($N_{req}$) of the at least one compressor (108) by using the desired mass flow rate ($W_{req}$) and the estimated operating condition ($\beta$) in the predetermined blower dataset (210); and

i) transmit a desired command signal (CS1) to the drive unit (202) to operate the at least one compressor (108) at the desired speed ($N_{req}$).

2. The cabin blower control system (200, 800, 900, 1000, 1100, 1200) of claim 1, wherein the processor (208) is further configured to:

receive an operating pressure range (P1) of a pressure of the outlet airflow (F2);

receive an operating temperature range (T1) of a temperature of the outlet airflow (F2);

receive an operating speed range (N) of the at least one compressor (108) of the blower unit (106);

determine a desired pressure ratio range of the blower unit (106) by using the inlet pressure ($P_A$) and the operating pressure range (P1);

determine a desired temperature ratio range of the blower unit (106) by using the inlet temperature ($T_A$) and the operating temperature range (T1); and

determine the desired speed ($N_{req}$) of the at least one compressor (108) by further using the desired pressure ratio range, the desired temperature ratio range, the operating speed range (N), and the estimated operating condition ($\beta$) in the predetermined blower dataset (210).

3. The cabin blower control system (200, 800, 900, 1000, 1100, 1200) of claim 2, wherein the blower unit (106) further includes a variable exit vane arrangement (112) configured to control the outlet airflow (F2), wherein the drive unit (202) is further configured to control the variable exit vane arrangement (112), wherein the pressure ratio dataset further correlates the pressure ratio of the blower unit (106) with at least the operating condition of the blower unit (106), the compressor speed of the at least one compressor (108), and a position of the variable exit vane arrangement (112), the isentropic efficiency dataset further correlates the isentropic efficiency of the blower unit (106) with at least the operating condition of the blower unit (106), the compressor speed of the at least one compressor (108), and the position of the variable exit vane arrangement (112), and the mass flow dataset further correlates the mass flow through the blower unit (106) with at least the operating condition of the blower unit (106), the compressor speed of the at least one compressor (108), and the position of the variable exit vane arrangement (112), and wherein the processor (208) is further configured to:

determine a set of desired speeds ($N_{req}$) of the at least one compressor (108) to achieve the desired mass flow rate ($W_{req}$) for all positions of the variable exit vane arrangement (112) using the estimated operating condition ($\beta$) in the mass flow dataset;

determine a combination of a desired position ($\alpha$) of the variable exit vane arrangement (112) and the desired speed ($N_{req}$) that satisfies each of the operating pressure range (P1) and the operating temperature range (T1) using the estimated operating condition ($\beta$) in the predetermined blower dataset (210); and

transmit a vane command signal (CS2) to the drive unit (202) to operate the variable exit vane arrangement (112) at the desired position ($\alpha$).

4. The cabin blower control system (800) of any preceding claim, wherein the processor (208) is further configured to:

receive a detected operating condition (OP2) of the cabin blower system (100) from at least one airframe system (110) positioned downstream of the cabin blower system (100); and

determine if the detected operating condition (OP2) of the cabin blower system (100) corresponds to the estimated operating condition ($\beta$) of the blower unit (106) based on a comparison between the detected operating condition (OP2) and the estimated operating condition ($\beta$).

5. The cabin blower control system (200, 800, 900, 1000, 1100, 1200) of any preceding claim, wherein the processor (208) is further configured to:

receive an operating efficiency ($\eta_M$) of the drive unit (202); and
determine the estimated operating condition ($\beta$) further based on the operating efficiency ($\eta_M$).

6. The cabin blower control system (900) of any preceding claim, further comprising a recirculation valve (902) adapted to provide selective fluid communication between the outlet (104) of the cabin blower system (100) and the inlet (102) of the cabin blower system (100), wherein the processor (208) is communicably coupled to the recirculation valve (902), and wherein the processor (208) is further configured to:

receive a desired temperature of the outlet airflow (F2) to meet the current loading on the cabin blower system (100); and
operate the recirculation valve (902) in an open state if the desired temperature of the outlet airflow (F2) is below a predefined temperature threshold.

7. The cabin blower control system (1100) of any preceding claim, further comprising a release valve (1102) adapted to provide selective fluid communication between the outlet (104) of the cabin blower system (100) and a bypass duct (22) downstream of the outlet (104) of the blower unit (106), wherein the processor (208) is communicably coupled to the release valve (1102), and wherein the processor (208) is further configured to operate the release valve (1102) in an open state in case of a high pressure, a high temperature, or a high mass flow rate in the cabin blower system (100).

8. The cabin blower control system (200, 800, 900, 1000, 1100, 1200) of any preceding claim, wherein the desired speed ($N_{req}$) of the at least one compressor (108) is determined without measuring any outlet conditions at the outlet (104) of the cabin blower system (100), the outlet (104) conditions including at least a mass flow rate, a temperature, and a pressure of the outlet airflow (F2).

9. A cabin blower system (100) comprising:

an inlet (102);
an outlet (104);
a blower unit (106) including at least one compressor (108), wherein the at least one compressor (108) is configured to receive an inlet airflow (F1) from the inlet (102) and generate an outlet airflow (F2) at the outlet (104); and
the cabin blower control system (200, 800, 900, 1000, 1100, 1200) of any preceding claim, wherein the drive unit (202) of the cabin blower control system (200, 800, 900, 1000, 1100, 1200) is operatively coupled to and configured to control the blower unit (106).

10. A method (1300) of controlling a cabin blower system (100), the cabin blower system (100) including an inlet (102), an outlet (104), and a blower unit (106), the method (1300) comprising the steps of:

a) receiving, by a processor (208) of a controller (204), a desired mass flow rate ($W_{req}$) of an outlet airflow (F2) at the outlet (104) of the cabin blower system (100) to meet a current loading on the cabin blower system (100), wherein the controller (204) includes a memory (206) configured to store a predetermined blower dataset (210) for the blower unit (106) of the cabin blower system (100), the blower unit (106) including at least one compressor (108) that is configured to receive an inlet airflow (F1) from the inlet (102) and generate the outlet airflow (F2) at the outlet (104), and wherein the predetermined blower dataset (210) includes at least a pressure ratio dataset correlating a pressure ratio of the blower unit (106) with at least an operating condition of the blower unit (106) and a compressor speed of the at least one compressor (108), an isentropic efficiency dataset correlating an isentropic efficiency of the blower unit (106) with at least the operating condition of the blower unit (106) and a compressor speed of the at least one compressor (108), and a mass flow dataset correlating a mass flow through the blower unit (106) with at least the operating condition of the blower unit (106) and the compressor speed of the at least one compressor (108), the operating condition of the blower unit (106) including one or more operating parameters at the outlet (104) of the blower unit (106);
b) receiving, by the processor (208), measurements of an inlet temperature ($T_A$) and an inlet pressure ($P_A$) of the inlet airflow (F1) at the inlet (102) of the blower unit (106);
c) receiving, by the processor (208), a previous operating condition of the blower unit (106);
d) receiving, by the processor (208), a current speed of the at least one compressor (108);
e) determining, by the processor (208), an estimated power consumption ($\hat{y}$) of the blower unit (106) by using the inlet temperature ($T_A$), the inlet pressure ($P_A$), the current speed of the at least one compressor (108), and the previous operating condition of the blower unit (106) in the predetermined blower dataset (210);

f) determining, by the processor (208), a current power consumption ($y$) of the blower unit (106);

g) determining, by the processor (208), an estimated operating condition ($\beta$) of the blower unit (106) by using the current power consumption ($y$) and the estimated power consumption ($\hat{y}$) of the blower unit (106) in the predetermined blower dataset (210);

h) determining, by the processor (208), a desired speed ($N_{req}$) of the at least one compressor (108) by using the desired mass flow rate ($W_{req}$) and the estimated operating condition ($\beta$) in the predetermined blower dataset (210); and

i) transmitting, by the processor (208), a desired command signal (CS1) to a drive unit (202) to operate the at least one compressor (108) at the desired speed ($N_{req}$), wherein the drive unit (202) is operatively coupled to and configured to control the blower unit (106), and wherein the processor (208) is communicably coupled to the drive unit (202).

11. The method (1300) of claim 10, further comprising:

receiving, by the processor (208), an operating pressure range (P1) of a pressure of the outlet airflow (F2);
receiving, by the processor (208), an operating temperature range (T1) of a temperature of the outlet airflow (F2);
receiving, by the processor (208), an operating speed range (N) of the at least one compressor (108) of the blower unit (106);
determining, by the processor (208), a desired pressure ratio range of the blower unit (106) by using the inlet pressure ($P_A$) and the operating pressure range (P1);
determining, by the processor (208), a desired temperature ratio range of the blower unit (106) by using the inlet temperature ($T_A$) and the operating temperature range (T1); and
determining, by the processor (208), the desired speed ($N_{req}$) of the at least one compressor (108) by further using the desired pressure ratio range, the desired temperature ratio range, the operating speed range (N), and the estimated operating condition ($\beta$) in the predetermined blower dataset (210).

12. The method (1300) of claim 11, wherein the blower unit (106) further includes a variable exit vane arrangement (112) configured to control the outlet airflow (F2), wherein the drive unit (202) is further configured to control the variable exit vane arrangement (112), and wherein the pressure ratio dataset further correlates the pressure ratio of the blower unit (106) with at least the operating condition of the blower unit (106), the compressor speed of the at least one compressor (108), and a position of the variable exit vane arrangement (112), the isentropic efficiency dataset further correlates the isentropic efficiency of the blower unit (106) with at least the operating condition of the blower unit (106), the compressor speed of the at least one compressor (108), and the position of the variable exit vane arrangement (112), and the mass flow dataset further correlates the mass flow through the blower unit (106) with at least the operating condition of the blower unit (106), the compressor speed of the at least one compressor (108), and the position of the variable exit vane arrangement (112), the method (1300) further comprising:

determining, by the processor (208), a set of desired speeds ($N_{req}$) of the at least one compressor (108) to achieve the desired mass flow rate ($W_{req}$) for all positions of the variable exit vane arrangement (112) using the estimated operating condition ($\beta$) in the predetermined blower dataset (210);
determining, by the processor (208), a combination of a desired position ($\alpha$) of the variable exit vane arrangement (112) and the desired speed ($N_{req}$) that satisfies each of the operating pressure range (P1) and the operating temperature range (T1) using the estimated operating condition ($\beta$) in the predetermined blower dataset (210); and
transmitting, by the processor (208), a vane command signal (CS2) to the drive unit (202) to operate the variable exit vane arrangement (112) at the desired position ($\alpha$).

13. The method (1300) of any one of claims 10 to 12, further comprising:

receiving, by the processor (208), a detected operating condition (OP2) of the cabin blower system (100) from at least one airframe system (110) positioned downstream of the cabin blower system (100); and
determining, by the processor (208), if the detected operating condition (OP2) of the cabin blower system (100) corresponds to the estimated operating condition ($\beta$) of the blower unit (106) based on a comparison between the detected operating condition (OP2) and the estimated operating condition ($\beta$).

14. The method (1300) of any one of claims 10 to 13, further comprising:

receiving, by the processor (208), an operating efficiency ($\eta_M$) of the drive unit (202); and
determining, by the processor (208), the estimated operating condition ($\beta$) further based on the operating efficiency ($\eta_M$).

15. The method (1300) of any one of claims 10 to 14, wherein the cabin blower control system (900) further includes a recirculation valve (902) adapted to provide selective fluid communication between the outlet (104) of the cabin blower system (100) and the inlet (102) of the cabin blower system (100), and wherein the processor (208) is communicably coupled to the recirculation valve (902), the method (1300) further comprising:

receiving, by the processor (208), a desired temperature of the outlet airflow (F2) to meet the current loading on the cabin blower system (100); and
operating, by the processor (208), the recirculation valve (902) in an open state if the desired temperature of the outlet airflow (F2) is below a predefined temperature threshold.

**Patentansprüche**

1. Kabinengebläsesteuersystem (200, 800, 900, 1000, 1100, 1200) zur Steuerung eines Kabinengebläsesystems (100), wobei das Kabinengebläsesystem (100) einen Einlass (102), einen Auslass (104) und eine Gebläseeinheit (106) beinhaltet, wobei das Kabinengebläsesteuersystem (200, 800, 900, 1000, 1100, 1200) Folgendes umfasst:

eine Antriebseinheit (202), die dazu konfiguriert ist, betriebsmäßig an die Gebläseeinheit (106) gekoppelt zu sein, und dazu konfiguriert ist, diese zu steuern; und
ein Steuergerät (204), das einen Speicher (206) und einen Prozessor (208) beinhaltet, der kommunizierend mit dem Speicher (206) gekoppelt ist, wobei der Speicher (206) dazu konfiguriert ist, einen vorbestimmten Gebläsedatensatz (210) für die Gebläseeinheit (106) des Kabinengebläsesystems (100) zu speichern, wobei die Gebläseeinheit (106) zumindest einen Kompressor (108) beinhaltet, der dazu konfiguriert ist, einen Einlassluftstrom (F1) von dem Einlass (102) zu empfangen und einen Auslassluftstrom (F2) an dem Auslass (104) zu erzeugen, und wobei der Prozessor (208) dazu konfiguriert ist, die folgenden Schritte durchzuführen:

a) Empfangen eines gewünschten Massendurchsatzes ($W_{req}$) des Auslassluftstroms (F2), um eine aktuelle Belastung an dem Kabinengebläsesystem (100) zu erfüllen; und
b) Empfangen von Messungen einer Einlasstemperatur ($T_A$) und eines Einlassdrucks ($P_A$) des Einlassluftstroms (F1) an dem Einlass (102) der Gebläseeinheit (106);

wobei das Kabinengebläsesteuersystem **dadurch gekennzeichnet ist, dass**:

der Speicher (206) dazu konfiguriert ist, einen vorbestimmten Gebläsedatensatz (210) für die Gebläseeinheit (106) des Kabinengebläsesystems (100) zu speichern;
der vorbestimmte Gebläsedatensatz (210) zumindest einen Druckverhältnisdatensatz, der ein Druckverhältnis der Gebläseeinheit (106) mit zumindest einem Betriebszustand der Gebläseeinheit (106) und einer Kompressordrehzahl des zumindest einen Kompressors (108) korreliert, einen isentropen Wirkungsgraddatensatz, der einen isentropen Wirkungsgrad der Gebläseeinheit (106) mit zumindest dem Betriebszustand der Gebläseeinheit (106) und der Kompressordrehzahl des zumindest einen Kompressors (108) korreliert, und einen Massenstromdatensatz, der einen Massenstrom durch die Gebläseeinheit (106) mit zumindest dem Betriebszustand der Gebläseeinheit (106) und der Kompressordrehzahl des zumindest einen Kompressors (108) korreliert, beinhaltet, wobei der Betriebszustand der Gebläseeinheit (106) einen oder mehrere Betriebsparameter an dem Auslass (104) der Gebläseeinheit (106) beinhaltet;
der Prozessor (208) kommunizierend an die Antriebseinheit (202) gekoppelt ist; und der Prozessor (208) dazu konfiguriert ist, auch die folgenden Schritte durchzuführen:

c) Empfangen eines vorherigen Betriebszustands der Gebläseeinheit (106);
d) Empfangen einer aktuellen Drehzahl des zumindest einen Kompressors (108);
e) Bestimmen einer geschätzten Leistungsaufnahme ($\hat{y}$) der Gebläseeinheit (106) durch Verwendung der Einlasstemperatur ($T_A$), des Einlassdrucks ($P_A$), der aktuellen Drehzahl des zumindest einen Kompressors (108) und des vorherigen Betriebszustands der Gebläseeinheit (106) in dem vorbestimmten Gebläsedatensatz (210);
f) Bestimmen einer aktuellen Leistungsaufnahme ($y$) der Gebläseeinheit (106);

g) Bestimmen eines geschätzten Betriebszustands ($\beta$) der Gebläseeinheit (106) durch Verwendung der aktuellen Leistungsaufnahme ($y$) und der geschätzten Leistungsaufnahme ($\hat{y}$) der Gebläseeinheit (106) in dem vorbestimmten Gebläsedatensatz (210);

h) Bestimmen einer gewünschten Drehzahl ($N_{req}$) des zumindest einen Kompressors (108) durch Verwendung des gewünschten Massendurchsatzes ($W_{req}$) und des geschätzten Betriebszustands ($\beta$) in dem vorbestimmten Gebläsedatensatz (210); und

i) Übertragen eines gewünschtem Befehlssignals (CS1) an die Antriebseinheit (202), um den zumindest einen Kompressor (108) mit der gewünschten Drehzahl ($N_{req}$) zu betreiben.

2. Kabinengebläsesteuersystem (200, 800, 900, 1000, 1100, 1200) nach Anspruch 1, wobei der Prozessor (208) ferner zu Folgendem konfiguriert ist:

Empfangen eines Betriebsdruckbereichs (P1) eines Drucks des Auslassluftstroms (F2);
Empfangen eines Betriebstemperaturbereichs (T1) einer Temperatur des Auslassluftstroms (F2);
Empfangen eines Betriebsdrehzahlbereichs (N) des zumindest einen Kompressors (108) der Gebläseeinheit (106);
Bestimmen eines gewünschten Druckverhältnisbereichs der Gebläseeinheit (106) durch Verwendung des Eingangsdrucks ($P_A$) und des Betriebsdruckbereichs (P1);
Bestimmen eines gewünschten Temperaturverhältnisbereichs der Gebläseeinheit (106) durch Verwendung der Einlasstemperatur ($T_A$) und des Betriebstemperaturbereichs (T1); und
Bestimmen der gewünschten Drehzahl ($N_{req}$) des zumindest einen Kompressors (108) durch weitere Verwendung des gewünschten Druckverhältnisbereichs, des gewünschten Temperaturverhältnisbereichs, des Betriebsdrehzahlbereichs (N) und des geschätzten Betriebszustands ($\beta$) in dem vorbestimmten Gebläsedatensatz (210).

3. Kabinengebläsesteuersystem (200, 800, 900, 1000, 1100, 1200) nach Anspruch 2, wobei die Gebläseeinheit (106) ferner eine Schaufelanordnung (112) mit variablem Austritt beinhaltet, die dazu konfiguriert ist, den Auslassluftstrom (F2) zu steuern, wobei die Antriebseinheit (202) ferner dazu konfiguriert ist, die Schaufelanordnung (112) mit variablem Austritt zu steuern, wobei der Druckverhältnisdatensatz ferner das Druckverhältnis der Gebläseeinheit (106) mit zumindest dem Betriebszustand der Gebläseeinheit (106), der Kompressordrehzahl des zumindest einen Kompressors (108) und einer Position der Schaufelanordnung (112) mit variablem Austritt korreliert, wobei der isentrope Wirkungsgraddatensatz ferner den isentropen Wirkungsgrad der Gebläseeinheit (106) mit zumindest dem Betriebszustand der Gebläseeinheit (106), der Kompressordrehzahl des zumindest einen Kompressors (108) und der Position der Schaufelanordnung (112) mit variablem Austritt korreliert, und der Massenstromdatensatz ferner den Massenstrom durch die Gebläseeinheit (106) mit zumindest dem Betriebszustand der Gebläseeinheit (106), der Kompressordrehzahl des zumindest einen Kompressors (108) und der Position der Schaufelanordnung (112) mit variablem Austritt korreliert, und wobei der Prozessor (208) ferner zu Folgendem konfiguriert ist:

Bestimmen eines Satzes von gewünschten Drehzahlen ($N_{req}$) des zumindest einen Kompressors (108), um den gewünschten Massendurchsatz ($W_{req}$) für alle Positionen der Schaufelanordnung (112) mit variablem Austritt zu erreichen, unter Verwendung des geschätzten Betriebszustands ($\beta$) in dem Massenstromdatensatz;
Bestimmen einer Kombination aus einer gewünschten Position ($\alpha$) der Schaufelanordnung (112) mit variablem Austritt und der gewünschten Drehzahl ($N_{req}$), die jeweils den Betriebsdruckbereich (P1) und den Betriebstemperaturbereich (T1) einhält, unter Verwendung des geschätzten Betriebszustands ($\beta$) in dem vorbestimmten Gebläsedatensatz (210); und
Übertragen eines Schaufelbefehlssignals (CS2) an die Antriebseinheit (202), um die Schaufelanordnung (112) mit variablem Austritt an der gewünschten Position ($\alpha$) zu betreiben.

4. Kabinengebläsesteuersystem (800) nach einem vorhergehenden Anspruch, wobei der Prozessor (208) ferner zu Folgendem konfiguriert ist:

Empfangen eines erfassten Betriebszustands (OP2) des Kabinengebläsesystems (100) von zumindest einem Flugwerksystem (110), das stromabwärts des Kabinengebläsesystems (100) positioniert ist; und
Bestimmen, ob der erfasste Betriebszustand (OP2) des Kabinengebläsesystems (100) dem geschätzten Betriebszustand ($\beta$) der Gebläseeinheit (106) entspricht, basierend auf einem Vergleich zwischen dem erfassten Betriebszustand (OP2) und dem geschätzten Betriebszustand ($\beta$).

5. Kabinengebläsesteuersystem (200, 800, 900, 1000, 1100, 1200) nach einem vorhergehenden Anspruch, wobei der Prozessor (208) ferner zu Folgendem konfiguriert ist:

Empfangen eines Betriebswirkungsgrads ($\eta_M$) der Antriebseinheit (202); und
Bestimmen des geschätzten Betriebszustands ($\beta$) ferner basierend auf dem Betriebswirkungsgrad ($\eta_M$).

**6.** Kabinengebläsesteuersystem (900) nach einem vorhergehenden Anspruch, ferner umfassend ein Rezirkulationsventil (902), das dazu angepasst ist, selektive Fluidverbindung zwischen dem Auslass (104) des Kabinengebläsesystems (100) und dem Einlass (102) des Kabinengebläsesystems (100) bereitzustellen, wobei der Prozessor (208) kommunizierend an das Rezirkulationsventil (902) gekoppelt ist und wobei der Prozessor (208) ferner zu Folgendem konfiguriert ist:

Empfangen einer gewünschten Temperatur des Auslassluftstroms (F2), um die aktuelle Belastung an dem Kabinengebläsesystem (100) zu erfüllen; und
Betreiben des Rezirkulationsventils (902) in einem offenen Zustand, wenn die gewünschte Temperatur des Auslassluftstroms (F2) unter einem vordefinierten Temperaturschwellenwert liegt.

**7.** Kabinengebläsesteuersystem (1100) nach einem vorhergehenden Anspruch, ferner umfassend ein Freigabeventil (1102), das dazu angepasst ist, selektive Fluidverbindung zwischen dem Auslass (104) des Kabinengebläsesystems (100) und einem Umgehungskanal (22) stromabwärts des Auslasses (104) der Gebläseeinheit (106) bereitzustellen, wobei der Prozessor (208) kommunizierend an das Freigabeventil (1102) gekoppelt ist und wobei der Prozessor (208) ferner dazu konfiguriert ist, das Freigabeventil (1102) in einem offenen Zustand im Falle eines hohen Drucks, einer hohen Temperatur oder eines hohen Massendurchsatzes in dem Kabinengebläsesystem (100) zu betreiben.

**8.** Kabinengebläsesteuersystem (200, 800, 900, 1000, 1100, 1200) nach einem vorhergehenden Anspruch, wobei die gewünschte Drehzahl ($N_{req}$) des zumindest einen Kompressors (108) bestimmt wird, ohne irgendwelche Auslasszustände am Auslass (104) des Kabinengebläsesystems (100) zu messen, wobei die Zustände des Auslasses (104) zumindest einen Massendurchsatz, eine Temperatur und einen Druck des Auslassluftstroms (F2) beinhalten.

**9.** Kabinengebläsesystem (100), umfassend:

einen Einlass (102);
einen Auslass (104);
eine Gebläseeinheit (106), die zumindest einen Kompressor (108) beinhaltet, wobei der zumindest eine Kompressor (108) dazu konfiguriert ist, einen Einlassluftstrom (F1) von dem Einlass (102) zu empfangen und einen Auslassluftstrom (F2) an dem Auslass (104) zu erzeugen; und
das Kabinengebläsesteuersystem (200, 800, 900, 1000, 1100, 1200) nach einem vorhergehenden Anspruch, wobei die Antriebseinheit (202) des Kabinengebläsesteuersystems (200, 800, 900, 1000, 1100, 1200) betriebsmäßig an die Gebläseeinheit (106) gekoppelt ist und dazu konfiguriert ist, diese zu steuern.

**10.** Verfahren (1300) zur Steuerung eines Kabinengebläsesystems (100), wobei das Kabinengebläsesystem (100) einen Einlass (102), einen Auslass (104) und eine Gebläseeinheit (106) beinhaltet, wobei das Verfahren (1300) die folgenden Schritte umfasst:

a) Empfangen, durch einen Prozessor (208) eines Steuergeräts (204), eines gewünschten Massendurchsatzes ($W_{req}$) eines Auslassluftstroms (F2) an dem Auslass (104) des Kabinengebläsesystems (100), um eine aktuelle Belastung des Kabinengebläsesystems (100) zu erfüllen, wobei das Steuergerät (204) einen Speicher (206) beinhaltet, der dazu konfiguriert ist, einen vorbestimmten Gebläsedatensatz (210) für die Gebläseeinheit (106) des Kabinengebläsesystems (100) zu speichern, wobei die Gebläseeinheit (106) zumindest einen Kompressor (108) beinhaltet, der dazu konfiguriert ist, einen Einlassluftstrom (F1) von dem Einlass (102) zu empfangen und den Auslassluftstrom (F2) an dem Auslass (104) zu erzeugen, und wobei der vorbestimmte Gebläsedatensatz (210) zumindest einen Druckverhältnisdatensatz, der ein Druckverhältnis der Gebläseeinheit (106) mit zumindest einem Betriebszustand der Gebläseeinheit (106) und einer Kompressordrehzahl des zumindest einen Kompressors (108) korreliert, einen isentropen Wirkungsgraddatensatz, der einen isentropen Wirkungsgrad der Gebläseeinheit (106) mit zumindest dem Betriebszustand der Gebläseeinheit (106) und einer Kompressordrehzahl des zumindest einen Kompressors (108) korreliert, und einen Massenstromdatensatz, der einen Massenstrom durch die Gebläseeinheit (106) mit zumindest dem Betriebszustand der Gebläseeinheit (106) und der Kompressordrehzahl des zumindest einen Kompressors (108) korreliert, beinhaltet, wobei der Betriebszustand der Gebläseeinheit (106) einen oder mehrere Betriebsparameter an dem Auslass (104) der Gebläseeinheit (106) beinhaltet;

b) Empfangen, durch den Prozessor (208), von Messungen einer Einlasstemperatur ($T_A$) und eines Einlassdrucks ($P_A$) des Einlassluftstroms (F1) an dem Einlass (102) der Gebläseeinheit (106);

c) Empfangen, durch den Prozessor (208), eines vorherigen Betriebszustands der Gebläseeinheit (106);

d) Empfangen, durch den Prozessor (208), einer aktuellen Drehzahl des zumindest einen Kompressors (108);

e) Bestimmen, durch den Prozessor (208), einer geschätzten Leistungsaufnahme ($\hat{y}$) der Gebläseeinheit (106) durch Verwendung der Einlasstemperatur ($T_A$), des Einlassdrucks ($P_A$), der aktuellen Drehzahl des zumindest einen Kompressors (108) und des vorherigen Betriebszustands der Gebläseeinheit (106) in dem vorbestimmten Gebläsedatensatz (210);

f) Bestimmen, durch den Prozessor (208), einer aktuellen Leistungsaufnahme ($y$) der Gebläseeinheit (106);

g) Bestimmen, durch den Prozessor (208), eines geschätzten Betriebszustands ($\beta$) der Gebläseeinheit (106) durch Verwendung der aktuellen Leistungsaufnahme ($y$) und der geschätzten Leistungsaufnahme ($\hat{y}$) der Gebläseeinheit (106) in dem vorbestimmten Gebläsedatensatz (210);

h) Bestimmen, durch den Prozessor (208), einer gewünschten Drehzahl ($N_{req}$) des zumindest einen Kompressors (108) durch Verwendung des gewünschten Massendurchsatzes ($W_{req}$) und des geschätzten Betriebszustands ($\beta$) in dem vorbestimmten Gebläsedatensatz (210); und

i) Übertragen, durch den Prozessor (208), eines gewünschten Befehlssignals (CS1) an eine Antriebseinheit (202), um den zumindest einen Kompressor (108) mit der gewünschten Drehzahl ($N_{req}$) zu betreiben, wobei die Antriebseinheit (202) betriebsmäßig an die Gebläseeinheit (106) gekoppelt ist und dazu konfiguriert ist, diese zu steuern, und wobei der Prozessor (208) kommunizierend an die Antriebseinheit (202) gekoppelt ist.

11. Verfahren (1300) nach Anspruch 10, ferner umfassend:

Empfangen, durch den Prozessor (208), eines Betriebsdruckbereichs (P1) eines Drucks des Auslassluftstroms (F2);

Empfangen, durch den Prozessor (208), eines Betriebstemperaturbereichs (T1) einer Temperatur des Auslassluftstroms (F2);

Empfangen, durch den Prozessor (208), eines Betriebsdrehzahlbereichs (N) des zumindest einen Kompressors (108) der Gebläseeinheit (106);

Bestimmen, durch den Prozessor (208), eines gewünschten Druckverhältnisbereichs der Gebläseeinheit (106) durch Verwendung des Einlassdrucks ($P_A$) und des Betriebsdruckbereichs (P1);

Bestimmen, durch den Prozessor (208), eines gewünschten Temperaturverhältnisbereichs der Gebläseeinheit (106) durch Verwendung der Einlasstemperatur ($T_A$) und des Betriebstemperaturbereichs (T1); und

Bestimmen, durch den Prozessor (208), der gewünschten Drehzahl ($N_{req}$) des zumindest einen Kompressors (108) durch weitere Verwendung des gewünschten Druckverhältnisbereichs, des gewünschten Temperaturverhältnisbereichs, des Betriebsdrehzahlbereichs (N) und des geschätzten Betriebszustands ($\beta$) in dem vorbestimmten Gebläsedatensatz (210).

12. Verfahren (1300) nach Anspruch 11, wobei die Gebläseeinheit (106) ferner eine Schaufelanordnung (112) mit variablem Austritt beinhaltet, die dazu konfiguriert ist, den Auslassluftstrom (F2) zu steuern, wobei die Antriebseinheit (202) ferner dazu konfiguriert ist, die Schaufelanordnung (112) mit variablem Austritt zu steuern, und wobei der Druckverhältnisdatensatz ferner das Druckverhältnis der Gebläseeinheit (106) mit zumindest dem Betriebszustand der Gebläseeinheit (106), der Kompressordrehzahl des zumindest einen Kompressors (108) und einer Position der Schaufelanordnung (112) mit variablem Austritt korreliert, wobei der isentrope Wirkungsgraddatensatz ferner den isentropen Wirkungsgrad der Gebläseeinheit (106) mit zumindest dem Betriebszustand der Gebläseeinheit (106), der Kompressordrehzahl des zumindest einen Kompressors (108) und der Position der Schaufelanordnung (112) mit variablem Austritt korreliert, und der Massenstromdatensatz ferner den Massenstrom durch die Gebläseeinheit (106) mit zumindest dem Betriebszustand der Gebläseeinheit (106), der Kompressordrehzahl des zumindest einen Kompressors (108) und der Position der Schaufelanordnung (112) mit variablem Austritt korreliert, und wobei das Verfahren (1300) ferner Folgendes umfasst:

Bestimmen, durch den Prozessor (208), eines Satzes von gewünschten Drehzahlen ($N_{req}$) des zumindest einen Kompressors (108), um den gewünschten Massendurchsatz ($W_{req}$) für alle Positionen der Schaufelanordnung (112) mit variablem Austritt zu erreichen, unter Verwendung des geschätzten Betriebszustands ($\beta$) in dem vorbestimmten Gebläsedatensatz (210);

Bestimmen, durch den Prozessor (208), einer Kombination aus einer gewünschten Position ($\alpha$) der Schaufelanordnung (112) mit variablem Austritt und der gewünschten Drehzahl ($N_{req}$), die jeweils den Betriebsdruckbereich (P1) und den Betriebstemperaturbereich (T1) einhält, unter Verwendung des geschätzten Betriebs-

zustands ($\beta$) in dem vorbestimmten Gebläsedatensatz (210); und

Übertragen, durch den Prozessor (208), eines Schaufelbefehlssignals (CS2) an die Antriebseinheit (202), um die Schaufelanordnung (112) mit variablem Austritt an der gewünschten Position ($\alpha$) zu betreiben.

**13.** Verfahren (1300) nach einem der Ansprüche 10 bis 12, ferner umfassend:

Empfangen, durch den Prozessor (208), eines erfassten Betriebszustands (OP2) des Kabinengebläsesystems (100) von zumindest einem Flugwerksystem (110), das stromabwärts des Kabinengebläsesystems (100) positioniert ist; und

Bestimmen, durch den Prozessor (208), ob der erfasste Betriebszustand (OP2) des Kabinengebläsesystems (100) dem geschätzten Betriebszustand ($\beta$) der Gebläseeinheit (106) entspricht, basierend auf einem Vergleich zwischen dem erfassten Betriebszustand (OP2) und dem geschätzten Betriebszustand ($\beta$).

**14.** Verfahren (1300) nach einem der Ansprüche 10 bis 13, ferner umfassend:

Empfangen, durch den Prozessor (208), eines Betriebswirkungsgrads ($\eta_M$) der Antriebseinheit (202); und

Bestimmen, durch den Prozessor (208), des geschätzten Betriebszustands ($\beta$) ferner basierend auf dem Betriebswirkungsgrad ($\eta_M$).

**15.** Verfahren (1300) nach einem der Ansprüche 10 bis 14, wobei das Kabinengebläsesteuersystem (900) ferner ein Rezirkulationsventil (902) beinhaltet, das dazu angepasst ist, selektive Fluidverbindung zwischen dem Auslass (104) des Kabinengebläsesystems (100) und dem Einlass (102) des Kabinengebläsesystems (100) bereitzustellen, und wobei der Prozessor (208) kommunizierend an das Rezirkulationsventil (902) gekoppelt ist, wobei das Verfahren (1300) ferner Folgendes umfasst:

Empfangen, durch den Prozessor (208), einer gewünschten Temperatur des Auslassluftstroms (F2), um die aktuelle Belastung an dem Kabinengebläsesystem (100) zu erfüllen; und

Betreiben, durch den Prozessor (208), des Rezirkulationsventils (902) in einem offenen Zustand, wenn die gewünschte Temperatur des Auslassluftstroms (F2) unter einem vordefinierten Temperaturschwellenwert liegt.

## Revendications

**1.** Système de contrôle du ventilateur de cabine (200, 800, 900, 1000, 1100, 1200) destiné à contrôler un système de ventilateur de cabine (100), le système de ventilateur de cabine (100) comprenant une entrée (102), une sortie (104) et une unité de ventilateur (106), le système de contrôle du ventilateur de cabine (200, 800, 900, 1000, 1100, 1200) comprenant :

une unité d'entraînement (202) configurée pour être fonctionnellement couplée à et configurée pour contrôler l'unité de ventilateur (106) ; et

un contrôleur (204) comprenant une mémoire (206) et un processeur (208) couplé en communication avec la mémoire (206), dans lequel la mémoire (206) est configurée pour stocker un ensemble de données de ventilateur prédéterminé (210) pour l'unité de ventilateur (106) du système de ventilateur de cabine (100), l'unité de ventilateur (106) comprenant au moins un compresseur (108) qui est configuré pour recevoir un flux d'air d'entrée (F1) en provenance de l'entrée (102) et générer un flux d'air de sortie (F2) au niveau de la sortie (104), et dans lequel le processeur (208) est configuré pour effectuer les étapes suivantes :

a) recevoir un débit massique souhaité ($W_{req}$) du flux d'air de sortie (F2) pour répondre à une charge actuelle sur le système de ventilateur de cabine (100) ; et

b) recevoir des mesures d'une température d'entrée ($T_A$) et d'une pression d'entrée ($P_A$) du flux d'air d'entrée (F1) au niveau de l'entrée (102) de l'unité de ventilateur (106) ;

le système de contrôle du ventilateur de cabine étant **caractérisé en ce que** :

la mémoire (206) est configurée pour stocker un ensemble de données de ventilateur prédéterminé (210) pour l'unité de ventilateur (106) du système de ventilateur de cabine (100) ;

l'ensemble de données de ventilateur prédéterminé (210) comprend au moins un ensemble de données de rapport de pression mettant en corrélation un rapport de pression de l'unité de ventilateur (106) avec au moins une condition de fonctionnement de l'unité de ventilateur (106) et une vitesse de compresseur de l'au moins un compresseur (108), un ensemble de données d'efficacité isentropique mettant en corrélation une efficacité isentropique de l'unité de ventilateur (106) avec au moins la condition de fonctionnement de l'unité de ventilateur (106) et la vitesse de compresseur de l'au moins un compresseur (108), et un ensemble de données de flux massique mettant en corrélation un flux massique traversant l'unité de ventilateur (106) avec au moins la condition de fonctionnement de l'unité de ventilateur (106) et la vitesse de compresseur de l'au moins un compresseur (108), la condition de fonctionnement de l'unité de ventilateur (106) comprenant un ou plusieurs paramètres de fonctionnement au niveau de la sortie (104) de l'unité de ventilateur (106) ;

le processeur (208) est couplé en communication avec l'unité d'entraînement (202) ; et le processeur (208) est configuré pour effectuer également les étapes suivantes :

c) recevoir une condition de fonctionnement précédente de l'unité de ventilateur (106) ;

d) recevoir une vitesse actuelle de l'au moins un compresseur (108) ;

e) déterminer une consommation d'énergie estimée ($\hat{y}$) de l'unité de ventilateur (106) en utilisant la température d'entrée ($T_A$), la pression d'entrée ($P_A$), la vitesse actuelle de l'au moins un compresseur (108) et la condition de fonctionnement précédente de l'unité de ventilateur (106) dans l'ensemble de données de ventilateur prédéterminé (210) ;

f) déterminer une consommation d'énergie actuelle ($y$) de l'unité de ventilateur (106) ;

g) déterminer une condition de fonctionnement estimée ($\beta$) de l'unité de ventilateur (106) en utilisant la consommation d'énergie actuelle ($y$) et la consommation d'énergie estimée ($\hat{y}$) de l'unité de ventilateur (106) dans l'ensemble de données de ventilateur prédéterminé (210) ;

h) déterminer une vitesse souhaitée ($N_{req}$) de l'au moins un compresseur (108) en utilisant le débit massique souhaité ($W_{req}$) et la condition de fonctionnement estimée ($\beta$) dans l'ensemble de données de ventilateur prédéterminé (210) ; et

i) transmettre un signal de commande souhaité (CS1) à l'unité d'entraînement (202) pour faire fonctionner l'au moins un compresseur (108) à la vitesse souhaitée ($N_{req}$).

2. Système de contrôle du ventilateur de cabine (200, 800, 900, 1000, 1100, 1200) selon la revendication 1, dans lequel le processeur (208) est en outre configuré pour :

recevoir une plage de pression de fonctionnement (P1) d'une pression du flux d'air de sortie (F2) ;

recevoir une plage de température de fonctionnement (T1) d'une température du flux d'air de sortie (F2) ;

recevoir une plage de vitesse de fonctionnement (N) de l'au moins un compresseur (108) de l'unité de ventilateur (106) ;

déterminer une plage de rapport de pression souhaitée de l'unité de ventilateur (106) en utilisant la pression d'entrée ($P_A$) et la plage de pression de fonctionnement (P1) ;

déterminer une plage de rapport de température souhaitée de l'unité de ventilateur (106) en utilisant la température d'entrée ($T_A$) et la plage de température de fonctionnement (T1) ; et

déterminer la vitesse souhaitée ($N_{req}$) de l'au moins un compresseur (108) en utilisant en outre la plage de rapport de pression souhaitée, la plage de rapport de température souhaitée, la plage de vitesse de fonctionnement (N) et la condition de fonctionnement estimée ($\beta$) dans l'ensemble de données de ventilateur prédéterminé (210).

3. Système de contrôle du ventilateur de cabine (200, 800, 900, 1000, 1100, 1200) selon la revendication 2, dans lequel l'unité de ventilateur (106) comprend en outre un agencement d'aubes de sortie variable (112) configuré pour contrôler le flux d'air de sortie (F2), dans lequel l'unité d'entraînement (202) est en outre configurée pour contrôler l'agencement d'aubes de sortie variable (112), dans lequel l'ensemble de données de rapport de pression met en outre en corrélation le rapport de pression de l'unité de ventilateur (106) avec au moins la condition de fonctionnement de l'unité de ventilateur (106), la vitesse de compresseur de l'au moins un compresseur (108) et une position de l'agencement d'aubes de sortie variable (112), l'ensemble de données d'efficacité isentropique met en outre en corrélation l'efficacité isentropique de l'unité de ventilateur (106) avec au moins la condition de fonctionnement de l'unité de ventilateur (106), la vitesse de compresseur de l'au moins un compresseur (108) et la position de l'agencement d'aubes de sortie variable (112), et l'ensemble de données de débit massique met en outre en corrélation le débit massique traversant l'unité de ventilateur (106) avec au moins la condition de fonctionnement de l'unité de ventilateur (106), la vitesse de compresseur de l'au moins un compresseur (108), et la position de l'agencement d'aubes de sortie variable (112), et dans lequel le processeur (208) est en outre configuré pour :

déterminer un ensemble de vitesses souhaitées ($N_{req}$) de l'au moins un compresseur (108) pour atteindre le débit massique souhaité ($W_{req}$) pour toutes les positions de l'agencement d'aubes de sortie variable (112) en utilisant la condition de fonctionnement estimée ($\beta$) dans l'ensemble de données de débit massique ;
déterminer une combinaison d'une position souhaitée ($\alpha$) de l'agencement d'aubes de sortie variable (112) et de la vitesse souhaitée ($N_{req}$) qui satisfait chacune de la plage de pression de fonctionnement (P1) et de la plage de température de fonctionnement (T1) en utilisant la condition de fonctionnement estimée ($\beta$) dans l'ensemble de données de ventilateur prédéterminé (210) ; et
transmettre un signal de commande d'aube (CS2) à l'unité d'entraînement (202) pour faire fonctionner l'agencement d'aubes de sortie variable (112) à la position souhaitée ($\alpha$).

4. Système de contrôle du ventilateur de cabine (800) selon l'une quelconque des revendications précédentes, dans lequel le processeur (208) est en outre configuré pour :

recevoir une condition de fonctionnement détectée (OP2) du système de ventilateur de cabine (100) à partir d'au moins un système de cellule (110) positionné en aval du système de ventilateur de cabine (100) ; et
déterminer si la condition de fonctionnement détectée (OP2) du système de ventilateur de cabine (100) correspond à la condition de fonctionnement estimée ($\beta$) de l'unité de ventilateur (106) sur la base d'une comparaison entre la condition de fonctionnement détectée (OP2) et la condition de fonctionnement estimée ($\beta$).

5. Système de contrôle du ventilateur de cabine (200, 800, 900, 1000, 1100, 1200) selon l'une quelconque des revendications précédentes, dans lequel le processeur (208) est en outre configuré pour :

recevoir une efficacité de fonctionnement ($\eta_M$) de l'unité d'entraînement (202) ; et
déterminer la condition de fonctionnement estimée ($\beta$) également sur la base l'efficacité de fonctionnement ($\eta_M$).

6. Système de contrôle du ventilateur de cabine (900) selon l'une quelconque des revendications précédentes, comprenant en outre une vanne de recirculation (902) adaptée pour fournir une communication fluidique sélective entre la sortie (104) du système de ventilateur de cabine (100) et l'entrée (102) du système de ventilateur de cabine (100), dans lequel le processeur (208) est couplé en communication avec la vanne de recirculation (902), et dans lequel le processeur (208) est en outre configuré pour :

recevoir une température souhaitée du flux d'air de sortie (F2) pour répondre à la charge actuelle sur le système de ventilateur de cabine (100) ; et
faire fonctionner la vanne de recirculation (902) dans un état ouvert si la température souhaitée du flux d'air de sortie (F2) est inférieure à un seuil de température prédéfini.

7. Système de contrôle du ventilateur de cabine (1100) selon l'une quelconque des revendications précédentes, comprenant en outre une vanne de décharge (1102) adaptée pour fournir une communication fluidique sélective entre la sortie (104) du système de ventilateur de cabine (100) et un conduit de dérivation (22) en aval de la sortie (104) de l'unité de ventilateur (106), dans lequel le processeur (208) est couplé en communication avec la vanne de décharge (1102), et dans lequel le processeur (208) est en outre configuré pour faire fonctionner la vanne de décharge (1102) dans un état ouvert en cas de pression élevée, de température élevée ou de débit massique élevé dans le système de ventilateur de cabine (100).

8. Système de contrôle du ventilateur de cabine (200, 800, 900, 1000, 1100, 1200) selon l'une quelconque des revendications précédentes, dans lequel la vitesse souhaitée ($N_{req}$) de l'au moins un compresseur (108) est déterminée sans mesurer la moindre condition de sortie à la sortie (104) du système de ventilateur de cabine (100), les conditions en sortie (104) comprenant au moins un débit massique, une température et une pression du flux d'air de sortie (F2).

9. Système de ventilateur de cabine (100) comprenant :

une entrée (102) ;
une sortie (104) ;
une unité de ventilateur (106) comprenant au moins un compresseur (108), dans lequel l'au moins un compresseur (108) est configuré pour recevoir un flux d'air d'entrée (F1) en provenance de l'entrée (102) et pour générer un flux d'air de sortie (F2) au niveau de la sortie (104) ; et
le système de contrôle du ventilateur de cabine (200, 800, 900, 1000, 1100, 1200) selon l'une quelconque des revendications précédentes, dans lequel l'unité d'entraînement (202) du système de contrôle du ventilateur de cabine (200, 800, 900, 1000, 1100, 1200) est fonctionnellement couplée à et configurée pour contrôler l'unité de ventilateur (106).

**10.** Méthode (1300) de contrôle d'un système de ventilateur de cabine (100), le système de ventilateur de cabine (100) comprenant une entrée (102), une sortie (104) et une unité de ventilateur (106), la méthode (1300) comprenant les étapes de :

a) réception, par un processeur (208) d'un contrôleur (204), d'un débit massique souhaité ($W_{req}$) d'un flux d'air de sortie (F2) au niveau de la sortie (104) du système de ventilateur de cabine (100) pour répondre à une charge actuelle sur le système de ventilateur de cabine (100), dans lequel le contrôleur (204) comprend une mémoire (206) configurée pour stocker un ensemble de données de ventilateur prédéterminé (210) pour l'unité de ventilateur (106) du système de ventilateur de cabine (100), l'unité de ventilateur (106) comprenant au moins un compresseur (108) qui est configuré pour recevoir un flux d'air d'entrée (F1) en provenance de l'entrée (102) et générer le flux d'air de sortie (F2) au niveau de la sortie (104), et dans lequel l'ensemble de données de ventilateur prédéterminé (210) comprend au moins un ensemble de données de rapport de pression mettant en corrélation un rapport de pression de l'unité de ventilateur (106) avec au moins une condition de fonctionnement de l'unité de ventilateur (106) et une vitesse de compresseur de l'au moins un compresseur (108), un ensemble de données d'efficacité isentropique mettant en corrélation une efficacité isentropique de l'unité de ventilateur (106) avec au au moins la condition de fonctionnement de l'unité de ventilateur (106) et une vitesse de compresseur de l'au moins un compresseur (108), et un ensemble de données de flux massique mettant en corrélation un flux massique traversant l'unité de ventilateur (106) avec au moins la condition de fonctionnement de l'unité de ventilateur (106) et la vitesse de compresseur de l'au moins un compresseur (108), la condition de fonctionnement de l'unité de ventilateur (106) comprenant un ou plusieurs paramètres de fonctionnement au niveau de la sortie (104) de l'unité de ventilateur (106) ;

b) réception, par le processeur (208), des mesures d'une température d'entrée ($T_A$) et d'une pression d'entrée ($P_A$) du flux d'air d'entrée (F1) au niveau de l'entrée (102) de l'unité de ventilateur (106) ;

c) réception, par le processeur (208), d'une condition de fonctionnement précédente de l'unité de ventilateur (106) ;

d) réception, par le processeur (208), d'une vitesse actuelle de l'au moins un compresseur (108) ;

e) détermination, par le processeur (208), d'une consommation d'énergie estimée ($\acute{y}$) de l'unité de ventilateur (106) en utilisant la température d'entrée ($T_A$), la pression d'entrée ($P_A$), la vitesse actuelle de l'au moins un compresseur (108) et la condition de fonctionnement précédente de l'unité de ventilateur (106) dans l'ensemble de données de ventilateur prédéterminé (210) ;

f) détermination, par le processeur (208), d'une consommation d'énergie actuelle ($y$) de l'unité de ventilateur (106) ;

g) détermination, par le processeur (208), d'une condition de fonctionnement estimée ($\beta$) de l'unité de ventilateur (106) en utilisant la consommation d'énergie actuelle ($y$) et la consommation d'énergie estimée ($\acute{y}$) de l'unité de ventilateur (106) dans l'ensemble de données de ventilateur prédéterminé (210) ;

h) détermination, par le processeur (208), d'une vitesse souhaitée ($N_{req}$) de l'au moins un compresseur (108) en utilisant le débit massique souhaité ($W_{req}$) et la condition de fonctionnement estimée ($\beta$) dans l'ensemble de données de ventilateur prédéterminé (210) ; et

i) transmission, par le processeur (208), d'un signal de commande souhaité (CS1) à une unité d'entraînement (202) pour faire fonctionner l'au moins un compresseur (108) à la vitesse souhaitée ($N_{req}$), dans lequel l'unité d'entraînement (202) est fonctionnellement couplée à et configurée pour contrôler l'unité de ventilateur (106), et dans lequel le processeur (208) est couplé en communication avec l'unité d'entraînement (202).

**11.** Méthode (1300) selon la revendication 10, comprenant en outre :

la réception, par le processeur (208), d'une plage de pression de fonctionnement (P1) d'une pression du flux d'air de sortie (F2) ;

la réception, par le processeur (208), d'une plage de température de fonctionnement (T1) d'une température du flux d'air de sortie (F2) ;

la réception, par le processeur (208), d'une plage de vitesse de fonctionnement (N) de l'au moins un compresseur (108) de l'unité de ventilateur (106) ;

la détermination, par le processeur (208), d'une plage de rapport de pression souhaitée de l'unité de ventilateur (106) en utilisant la pression d'entrée ($P_A$) et la plage de pression de fonctionnement (P1) ;

la détermination, par le processeur (208), d'une plage de rapport de température souhaitée de l'unité de ventilateur (106) en utilisant la température d'entrée ($T_A$) et la plage de température de fonctionnement (T1) ; et

la détermination, par le processeur (208), de la vitesse souhaitée ($N_{req}$) de l'au moins un compresseur (108) en utilisant en outre la plage de rapport de pression souhaitée, la plage de rapport de température souhaitée, la plage de vitesse de fonctionnement (N) et la condition de fonctionnement estimée ($\beta$) dans l'ensemble de données de ventilateur prédéterminé (210).

**12.** Méthode (1300) selon la revendication 11, dans lequel l'unité de ventilateur (106) comprend en outre un agencement d'aubes de sortie variable (112) configuré pour contrôler le flux d'air de sortie (F2), dans lequel l'unité d'entraînement (202) est en outre configurée pour contrôler l'agencement d'aubes de sortie variable (112), dans lequel l'ensemble de données de rapport de pression met en outre en corrélation le rapport de pression de l'unité de ventilateur (106) avec au moins la condition de fonctionnement de l'unité de ventilateur (106), la vitesse de compresseur de l'au moins un compresseur (108) et une position de l'agencement d'aubes de sortie variable (112), l'ensemble de données d'efficacité isentropique met en outre en corrélation l'efficacité isentropique de l'unité de ventilateur (106) avec au moins la condition de fonctionnement de l'unité de ventilateur (106), la vitesse de compresseur de l'au moins un compresseur (108) et la position de l'agencement d'aubes de sortie variable (112), et l'ensemble de données de débit massique met en outre en corrélation le débit massique traversant l'unité de ventilateur (106) avec au moins la condition de fonctionnement de l'unité de ventilateur (106), la vitesse de compresseur de l'au moins un compresseur (108), et la position de l'agencement d'aubes de sortie variable (112), la méthode (1300) comprenant en outre :

la détermination, par le processeur (208), d'un ensemble de vitesses souhaitées ($N_{req}$) de l'au moins un compresseur (108) pour atteindre le débit massique souhaité ($F_{req}$) pour toutes les positions de l'agencement d'aubes de sortie variable (112) en utilisant la condition de fonctionnement estimée ($\beta$) dans l'ensemble de données de ventilateur prédéterminé (210) ;
la détermination, par le processeur (208), d'une combinaison d'une position souhaitée ($\alpha$) de l'agencement d'aubes de sortie variable (112) et de la vitesse souhaitée ($N_{req}$) qui satisfait chacune de la plage de pression de fonctionnement (P1) et de la plage de température de fonctionnement (T1) en utilisant la condition de fonctionnement estimée ($\beta$) dans l'ensemble de données de ventilateur prédéterminé (210) ; et
la transmission, par le processeur (208), d'un signal de commande d'aube (CS2) à l'unité d'entraînement (202) pour faire fonctionner l'agencement d'aubes de sortie variable (112) à la position souhaitée ($\alpha$).

**13.** Méthode (1300) selon une quelconque des revendications 10 à 12, comprenant en outre :

la réception, par le processeur (208), d'une condition de fonctionnement détectée (OP2) du système de ventilateur de cabine (100) à partir d'au moins un système de cellule (110) positionné en aval du système de ventilateur de cabine (100) ; et
la détermination, par le processeur (208), si la condition de fonctionnement détectée (OP2) du système de ventilateur de cabine (100) correspond à la condition de fonctionnement estimée ($\beta$) de l'unité de ventilateur (106) sur la base d'une comparaison entre la condition de fonctionnement détectée (OP2) et la condition de fonctionnement estimée ($\beta$).

**14.** Méthode (1300) selon l'une quelconque des revendications 10 à 13, comprenant en outre :

la réception, par le processeur (208), d'une efficacité de fonctionnement ($\eta_M$) de l'unité d'entraînement (202) ; et
la détermination, par le processeur (208), de la condition de fonctionnement estimée ($\beta$) également en fonction de l'efficacité de fonctionnement ($\eta_M$).

**15.** Méthode (1300) selon l'une quelconque des revendications 10 à 14, dans laquelle le système de contrôle du ventilateur de cabine (900) comprend en outre une vanne de recirculation (902) adaptée pour fournir une communication fluidique sélective entre la sortie (104) du système de ventilateur de cabine (100) et l'entrée (102) du système de ventilateur de cabine (100), et dans laquelle le processeur (208) est couplé en communication avec la vanne de recirculation (902), la méthode (1300) comprenant en outre :

la réception, par le processeur (208), d'une température souhaitée du flux d'air de sortie (F2) pour répondre à la charge actuelle sur le système de ventilateur de cabine (100) ; et
le fonctionnement, par le processeur (208), de la vanne de recirculation (902) dans un état ouvert si la température souhaitée du flux d'air de sortie (F2) est inférieure à un seuil de température prédéfini.

*FIG. 1*

*FIG. 2*

FIG. 3A

FIG. 3B

*FIG. 4*

*FIG. 5A*

*FIG. 5B*

*FIG. 5C*

*FIG. 6A*

*FIG. 6B*

*FIG. 6C*

EP 4 644 250 B1

**FIG. 7C**

**FIG. 7B**

**FIG. 7A**

*FIG. 8*

*FIG. 9*

EP 4 644 250 B1

*FIG. 10*

*FIG. 11*

*FIG. 12*

EP 4 644 250 B1

─1300

RECEIVE, BY PROCESSOR OF CONTROLLER, DESIRED MASS FLOW RATE OF OUTLET AIRFLOW AT OUTLET OF CABIN BLOWER SYSTEM TO MEET CURRENT LOADING ON CABIN BLOWER SYSTEM ╌a

RECEIVE, BY PROCESSOR, MEASUREMENTS OF INLET TEMPERATURE AND INLET PRESSURE OF INLET AIRFLOW AT INLET OF BLOWER UNIT ╌b

RECEIVE, BY PROCESSOR, PREVIOUS OPERATING CONDITION OF BLOWER UNIT ╌c

RECEIVE, BY PROCESSOR, CURRENT SPEED OF AT LEAST ONE COMPRESSOR ╌d

DETERMINE, BY PROCESSOR, ESTIMATED POWER CONSUMPTION OF BLOWER UNIT BY USING INLET TEMPERATURE, INLET PRESSURE, CURRENT SPEED OF AT LEAST ONE COMPRESSOR, AND PREVIOUS OPERATING CONDITION OF BLOWER UNIT IN PREDETERMINED BLOWER DATASET ╌e

DETERMINE, BY PROCESSOR, CURRENT POWER CONSUMPTION OF BLOWER UNIT ╌f

DETERMINE, BY PROCESSOR, ESTIMATED OPERATING CONDITION OF BLOWER UNIT BY USING CURRENT POWER CONSUMPTION AND ESTIMATED POWER CONSUMPTION OF BLOWER UNIT IN PREDETERMINED BLOWER DATASET ╌g

DETERMINE, BY PROCESSOR, DESIRED SPEED OF AT LEAST ONE COMPRESSOR BY USING DESIRED MASS FLOW RATE AND ESTIMATED OPERATING CONDITION IN PREDETERMINED BLOWER DATASET ╌h

TRANSMIT, BY PROCESSOR, DESIRED COMMAND SIGNAL TO DRIVE UNIT TO OPERATE AT LEAST ONE COMPRESSOR AT DESIRED SPEED ╌i

*FIG. 13*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210171205 A1

- US 20060080976 A1

**Non-patent literature cited in the description**

- **EBRAHIMI, MOHSEN ; QIANGQIANG HUANG ; XIAO HE ; XINQIAN ZHENG**. Effects of variable diffuser vanes on performance of a centrifugal compressor with pressure ratio of 8.0. *Energies*, 2017, vol. 10 (5)